(19) **Europäisches Patentamt European Patent Office Office européen des brevets**

(11) **EP 4 544 728 B1**

(12) **EUROPEAN PATENT SPECIFICATION**

(45) Date of publication and mention
of the grant of the patent:
**15.07.2026 Bulletin 2026/29**

(21) Application number: **23733900.7**

(22) Date of filing: **14.06.2023**

(51) International Patent Classification (IPC):
*H04L 9/08* (2006.01)      *H04L 9/32* (2006.01)

(52) Cooperative Patent Classification (CPC):
**H04L 9/085; H04L 9/0825; H04L 9/3218;
H04L 9/3247;** H04L 2209/46

(86) International application number:
**PCT/EP2023/066025**

(87) International publication number:
**WO 2023/247296 (28.12.2023 Gazette 2023/52)**

(54) **DISTRIBUTED DECRYPTION**

VERTEILTE ENTSCHLÜSSELUNG

DÉCHIFFREMENT DISTRIBUÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.06.2022 GB 202209073**

(43) Date of publication of application:
**30.04.2025 Bulletin 2025/18**

(73) Proprietor: **Cybernetica AS
12618 Tallinn (EE)**

(72) Inventors:
• **KIRSS, Johanna Maria
12618 Tallinn (EE)**
• **SNETKOV, Nikita
12618 Tallinn (EE)**
• **VAKARJUK, Jelizaveta
12618 Tallinn (EE)**
• **LAUD, Peeter
12618 Tallinn (EE)**

(74) Representative: **Finlayson, Scott Henry et al
Kilburn & Strode LLP
Lacon London
84 Theobalds Road
London WC1X 8NL (GB)**

(56) References cited:
**WO-A1-2022/069035      US-A1- 2021 391 987**

• **KIRSS JOHANNA MARIA ET AL: "Server-
Supported Decryption for Mobile Devices", 4
April 2023, ADVANCES IN VISUAL COMPUTING :
16TH INTERNATIONAL SYMPOSIUM, ISVC 2021,
VIRTUAL EVENT, OCTOBER 4-6, 2021,
PROCEEDINGS, PART II; [LECTURE NOTES IN
COMPUTER SCIENCE], SPRINGER
INTERNATIONAL PUBLISHING, CHAM, PAGE(S)
71 - 81, ISBN: 978-3-030-90436-4, ISSN:
0302-9743, XP047657879**

## Description

### Technical Field

This disclosure describes mechanisms for distributed decryption between two or more parties.

### Background

Distributed signing is a cryptographic process by which a cryptographic signature can only be applied to a document with the involvement of multiple parties. Distributed decryption is similarly a cryptographic process by which a document can only be decrypted with the involvement of multiple parties. As the reader will understand, distributed signing and decryption offer enhanced security. The secret key is shared by two or more parties, such that a single party can't sign or decrypt a document without the involvement of one or more additional parties.

In distributed signing, a document is formatted before the signing is performed. In distributed decryption, on the other hand, the formatting of the resulting plaintext is checked after the decryption has been performed. Distributed decryption may therefore have some attack scenarios that distributed signing does not have.

For satisfying stronger security requirements, such as security against chosen-ciphertext attacks (CCA), the decryption step of a distributed decryption process fails if the formatting is wrong, and the decryption can returns nothing besides a notification of failure. Where an adversary does not have a required share of the secret decryption key, it cannot distinguish between encryptions of different documents even if it has available a decryption functionality that it can apply to other ciphertexts.

*Threshold Cryptosystems Secure against Chosen-Ciphertext Attacks* by Pierre-Alain Fouque and David Pointcheval describes a first threshold cryptosystem secure against CCA that relies on the factorization problem and a second threshold cryptosystem secure against CCA based on the Rivest-Shamir-Adleman (RSA) model. *Chosen-Ciphertext Security of Multiple Encryption* by Yevgeniy Dodis and Jonathan Katz describes generic constructions of multiple-encryption schemes secure against CCA.

A problem, however, is that known distributed decryption approaches do not account for attacks arising from a parties to distributed decryption systems who are acting maliciously and in a less detectable manner. There exists a demand for a distributed decryption approach which improves security against such malicious parties to distributed decryption systems.

US2021/391987 A1 and WO 2022/069035 A1 are disclosures which belong to the prior art.

### Summary

The objects of the present invention are achieved by means of the appended set of claims.

The present disclosure describes methods and devices which improve security of decryption in distributed decryption systems, and in particular which provide security against malicious parties to distributed decryption systems which are undetectable by known threshold decryption security schemes. In particular, the present disclosure improves security against malicious parties who have used offline guessing attacks to obtain a share of a secret decryption key, for example against chosen ciphertext attacks by malicious parties who have learned some shares of the secret decryption key.

For example, a malicious party may have learned partial information about some shares of the key, from the parties that are unable to offer proper protection to their key-shares. Using this partial information, and having a ciphertext that it wants to decrypt, the malicious party may make an educated guess, what these key-shares may be. Invoking the decryption protocol with honest parties, the malicious party may find out whether its guess was correct. Even if the guess was wrong, and the malicious party is unable to decrypt the ciphertext, the outcome adds to the malicious party's information about these shares of the key, and repeated invocation of the decryption protocol may allow the malicious party to narrow down to the single correct value of these shares.

One way of improving security is to avoid the offline attacks that an adversary may be able to do after they have obtained the encrypted secret key share from a device, where the encryption key has low entropy. The success of an offline attack does not necessarily mean that the adversary has recovered the secret key share, but it may also simply mean that the adversary can recognize that decryption is being performed correctly.

In a first aspect there is provided a computer-implemented method for distributed asymmetric decryption between a first party and a second party, each of the first and second parties holding a different respective share of a secret key, the method comprising: receiving, at the second party: (i) a zero-knowledge proof of knowledge; and (ii) a plurality of inputs associated with a ciphertext to be decrypted, wherein the ciphertext is encrypted with a public key associated with the secret key; checking, by the second party, that the zero-knowledge proof of knowledge was generated based on the first party's share of the secret key; and in response to determining that the zero-knowledge proof of knowledge was generated based on the first party's share of the secret key, sending, by the second party, information derived from the second party's share of the secret key.

The association between the public key and the secret key may be an asymmetric association. That is, the public key may be for encrypting the document, and the secret key may be used for decrypting the document. The keys may work in opposite cryptographic directions from one another. The public and secret keys may be part of an asymmetric cryptographic system.

Because the secret key is split between the first party's share and the second party's share, the first aspect relates to distributed decryption (for example threshold decryption). Herein, the secret key may be the product of the first party's share of the secret key and the second party's share of the secret key. Therefore, the first party's share of the secret key may be defined as the secret key divided by the second party's share of the secret key. Similarly, the second party's share of the secret key may be defined as the secret key divided by the first party's share of the secret key.

Because the zero-knowledge proof of knowledge was generated based on the first party's share of the secret key, the proofs allows the verifier to check that the party that generated the proofs knows the value of the first party's share of the secret key $sk_1$. In this example, the second party P2 verifies the proof received from the first party P1 in order to ascertain that the first party P1 knows its own share of the secret key $sk_1$. This mechanism allows the first party and the second party to generate and send verifiable statements of knowledge of a particular value to each other without revealing the value itself. Whenever a zero-knowledge proof of knowledge cannot be verified by a party, the party halts its operations and does not further interact with the proof generator. As the proof generator does not receive a reply from the verifying party, any malicious attempt to extract information from the party is prevented. This means that, along with protection from Chosen-Ciphertext Attacks (CCA), the system is also provided with a novel security mechanism to counter offline-guessing attacks.

The first aspect may be performed at a network computer device, for example a server or a client device. That is to say, the second party may be a network computer device, such as a server or a client device. The first party may be a client device in communication with the second party.

In a second aspect there is provided a network device configured for performing distributed asymmetric decryption with a client device holding a first share of a secret key, the network device comprising a memory storing a second share of the secret key, and being configured to: receive, from a client device: (i) a zero-knowledge proof of knowledge; and (ii) a plurality of inputs associated with a ciphertext to be decrypted, wherein the ciphertext is encrypted with a public key associated with the secret key; check that the zero-knowledge proof of knowledge was generated based on the first share of the secret key; and in response to determining that the zero-knowledge proof of knowledge was generated based on the first share of the secret key, send information derived from the second share of the secret key to the client device.

In the present disclosure, "network device" and "second party" are used interchangeably. Therefore, where a feature is described in connection to the network device, it is to be understood that the feature in question applies equally to the second party. Similarly, "client device" and "first party" are used interchangeably in the present disclosure.

The network device may comprise a storage device and at least one processor. The storage device may have instructions stored thereon which, when executed by the at least one processor, cause the at least one processor to perform the required steps.

In a third aspect there is provided a computer-readable medium (for example a non-transitory computer readable medium) having instructions stored thereon which cause at least one processor to execute a method according to the first aspect.

Optional features of the first, second and third aspects are described below.

The ciphertext may comprise at least three elements: a first element, comprising a generator of a cyclic group raised to the power of a randomly generated number within the size of the cyclic group; a second element, comprising an encryption of a plaintext based on the public key, a hashing function, and the randomly generated number; a third element, comprising a further zero-knowledge proof of knowledge which is based on the randomly generated number.

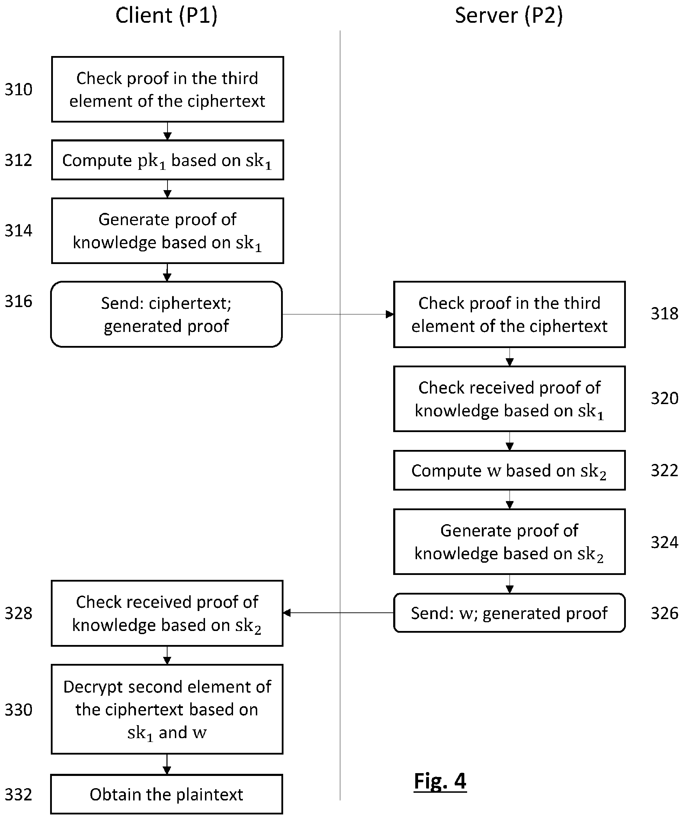

In one embodiment, the plurality of inputs associated with the ciphertext received at the second party may comprise the first, second and third elements of the ciphertext. This embodiment may correspond to Figure 4 and the accompanying description below.

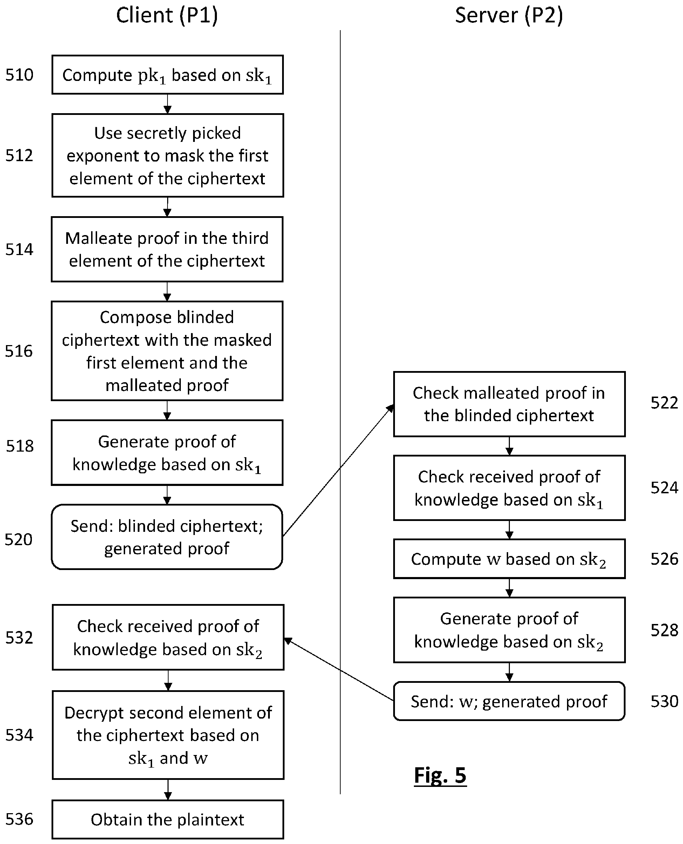

In an alternative embodiment with enhanced security, the plurality of inputs associated with the ciphertext received at the second party may comprise: a blinded version of the first element of the ciphertext, obtained by secretly picking and applying an exponent to mask the first element of the ciphertext; and a blinded proof obtained by malleating the non-interactive zero-knowledge proof of knowledge in the third element of the ciphertext. Malleating the proof in the third element of the ciphertext may include secretly picking and applying one or more exponents to mask one or more components of the proof. The blinded proof may be a designated-verifier, non-interactive zero-knowledge proof of knowledge. In particular, the proof may be also provided with an additional layer of encryption by applying a proof creation key during the malleation of the proof, so that the resulting blinded proof can only be verified using a proof verification key paired with the proof creation key. The second party may possess the proof verification key paired with the proof creation key and, therefore, may be the designated verifier of the blinded proof. Using the proof verification key, the second party may verify the blinded proof received from the first party. This embodiment may correspond to Figure 5 and the accompanying description below.

One or more of the zero-knowledge proofs of knowledge disclosed herein may be a non-interactive zero-knowledge proof of knowledge. For example, every zero-knowledge proof of knowledge disclosed herein may be a non-interactive zero-knowledge proof of knowledge. This type of zero-knowledge proof requires no interaction between the prover and verifier. Therefore, using the non-interactive zero-knowledge proof over the interactive zero knowledge proof saves communication and data transfer overhead, as it does not require any interaction. Further, it allows one proof to be used for any number of verifiers without interacting with each verifier, thereby reducing the amount of proofs that need to be generated by a prover.

The network device may check that the further zero-knowledge proof of knowledge in the third element of the ciphertext pertains to the same randomly generated number as the first element and the second element of the ciphertext. This check ensures that the received ciphertext was not maliciously generated as part of a CCA. It involves verifying that the second element $c$, representing the encryption of the plaintext, was obtained using the same randomly generated number r also used for obtaining the first element $u$, rather than being handpicked as required in CCA.

The network device may, for example, compute a third value ($\beta$) by inputting: (i) the generator of the cyclic group, (ii) the first element of the ciphertext, (iii) the first value ($\alpha$), and (iv) the second element of the ciphertext, into a random hashing function; and then check whether the generator of the cyclic group raised to the power of the second value ($\gamma$) equals a value obtained by multiplying the first value ($\alpha$) by the first element of the ciphertext raised to the power of the computed third value ($\beta$).

The further zero-knowledge proof of knowledge may comprise: a first value ($\alpha$) based on the generator of the cyclic group and the randomly generated number; and a second value ($\gamma$) based at least on the randomly generated number, a random hashing function, the generator of the cyclic group, the first value ($\alpha$), and the first element of the ciphertext.

The information derived from the second party's share of the secret key may be calculated by applying the second party's share of the secret key $sk_2$ to the first element $u$ of the ciphertext. This operation ensures that the value of the second party's share of the secret key $sk_2$ is never transmitted over the network, thereby introducing an additional safeguard in case the communication is intercepted or listened to by a malicious actor. For example, the information may be derived from the second party's share of the secret key by raising the first element $u$ of the ciphertext to the power of the second party's share of the secret key $sk_2$.

The first party's share of the public key may be obtained by raising a generator of a cyclic group raised to the power of a value of the first party's share of the secret key. Determining that the zero-knowledge proof of knowledge was generated based on the first party's share of the secret key may serve to verify that the first party's share of the secret key is compatible with the first party's share of the public key.

Herein, the public key may be the product of the first party's share of the public key and the second party's share of the public key. Therefore, the first party's share of the public key may be defined as the public key divided by the second party's share of the public key. Similarly, the second party's share of the public key may be defined as the public key divided by the first party's share of the public key.

The first party's share of the public key may not itself be publicly known. However, the first party's share of the public key may be derivable from the public key and the second party's share of the public key.

Similarly, the second party's share of the public key may not itself be publicly known. The second party's share of the public key may be derivable from the public key and the first party's share of the public key.

Checking that the zero-knowledge proof of knowledge was generated based on the first party's share of the secret key may comprise: computing, at the second party, a fourth value ($\beta$') by inputting: (i) the generator of the cyclic group, (ii) the first party's share of the public key, (iii) a fifth value ($\alpha$') included in the received proof of knowledge, into a random hashing function; checking whether the generator raised to the power of a received sixth value ($\gamma$') included in the received proof of knowledge, equals: the product of the fifth value ($\alpha$') included in the received proof of knowledge, multiplied by the first party's share of the public key raised to the power of the computed fourth value ($\beta$'). Additionally, the computing of the fourth value ($\beta$') may comprise further inputting: (iv) the first element of the ciphertext, (v) the second element of the ciphertext, and (vi) the third element of the ciphertext.

A party from which a zero-knowledge proof of knowledge was received may be blacklisted when it is determined that the zero knowledge proof of knowledge received from the party was not generated based on the first party's share of the secret key. For example, the first party may be blacklisted by the second party once a predetermined number of invalid zero-knowledge proofs of knowledge have been received by the second party from the first party.

The network device may generate a further zero-knowledge proof of knowledge based on the second party's share of the secret key; and send to the client computing device the further zero-knowledge proof of knowledge with the information derived from the second party's share of the secret key. The second party's share of the public key may be obtained, for example, by raising a generator of a cyclic group raised to the power of a value of the second party's share of the secret key. In one example, the further zero-knowledge proof of knowledge based on the second party's share of the secret key may be generated by: generating, at the second party, a random number within the size of the cyclic group; computing a seventh value ($\alpha$-u) by raising the first element of the ciphertext to the power of the generated random number; computing a eighth value ($\alpha$-g) by raising the generator of the cyclic group to the power of the generated random number; computing a ninth value ($\beta$") by inputting: (i) the first element of the ciphertext; (ii) the generator; (iii) the first element of the ciphertext raised to the power of the second party's share of the public key; (iv) the second party's share of the public key; (v) the seventh value ($\alpha$-u); and (vi) the eighth value of ($\alpha$-g), into a random hashing function; computing a tenth value ($\gamma$") by multiplying the ninth value ($\beta$") by the value of the second party's share of the secret key and subsequently adding the generated random value to it; wherein the seventh, eighth, ninth and tenth values comprise the further zero-knowledge proof of knowledge.

In a fourth aspect there is provided a computer-implemented method for distributed asymmetric decryption between a first party and a second party, each of the first and second parties holding a different respective share of a secret key, the method comprising: generating, by the first party, a zero-knowledge proof of knowledge based on the first party's share of the secret key; sending, by the first party: (i) the zero-knowledge proof of knowledge; and (ii) a plurality of inputs associated with a ciphertext to be decrypted, wherein the ciphertext is encrypted with a public key associated with the secret key; receiving, at the first party, information derived from the second party's share of the secret key; and generating, by the first party, a decryption of the ciphertext using the first party's share of the secret key and the received information.

The fourth aspect may be performed at a client device, such as a mobile device. That is to say, the first party may be a client device. The second party may be a network device in communication with the first party. As the reader will understand, the first party of the third aspect may be configured to operate in communication with the second party of the first aspect, so as to perform distributed decryption.

In a fifth aspect there is provided a client computing device, such as a mobile device, which is configured for performing distributed asymmetric decryption with a network device holding a second share of a secret key, the client computing device comprising a memory storing a first share of the secret key, and being configured to: generate a zero-knowledge proof of knowledge based on the first share of the secret key; send: (i) the zero-knowledge proof of knowledge; and (ii) a plurality of inputs associated with a ciphertext to be decrypted, wherein the ciphertext is encrypted with a public key associated with the secret key, to the network device; receive information derived from the second share of the secret key from the network device; and generate a decryption of the ciphertext using the first share of the secret key and the received information.

In the present disclosure, "client device" and "first party" are used interchangeably. Therefore, where a feature is described in connection to the client device, it is to be understood that the feature in question applies equally to the first party.

As the reader will understand, the client device of the fifth aspect may be configured to operate in communication with the network device of the second aspect, so as to perform distributed decryption.

The client device may comprise a storage device and at least one processor. The storage device may have instructions stored thereon which, when executed by the at least one processor, cause the at least one processor to perform the required steps.

In a sixth aspect there is provided a computer-readable medium (for example a non-transitory computer readable medium) having instructions stored thereon which cause at least one processor to execute a method according to the fourth aspect.

Optional features of the fourth, fifth and sixth aspects will now be described.

The information derived from the second party's share of the secret key may comprises the result of an operation in which the second party's share of the secret key is applied to an element of the ciphertext. For example, the information may be derived from the second party's share of the secret key by raising the first element of the ciphertext to the power of the second party's share of the secret key.

The ciphertext may comprise at least three elements: a first element, comprising a generator of a cyclic group raised to the power of a randomly generated number within the size of the cyclic group; a second element, comprising an encryption of a plaintext based on the public key, a hashing function, and the randomly generated number; a third element, comprising a further zero-knowledge proof of knowledge which is based on the randomly generated number. In one example, the further zero-knowledge proof of knowledge may comprise: a first value ($\alpha$) based on the generator and the randomly generated number, and a second value ($\gamma$) based at least on the randomly generated number, a random hashing function, the generator, the first value ($\alpha$), and the first element of the ciphertext.

In one embodiment, the plurality of inputs associated with the ciphertext sent by the first party may comprise the first, second and third elements of the ciphertext. This embodiment may correspond to Figure 4 and the accompanying description below.

In an alternative embodiment with enhanced security, the plurality of inputs associated with the ciphertext sent by the first party may comprise: a blinded version of the first element of the ciphertext, obtained by secretly picking and applying an exponent to mask the first element of the ciphertext; and a blinded proof obtained by malleating the non-interactive zero-knowledge proof of knowledge in the third element of the ciphertext. Malleating the proof in the third element of the ciphertext may include secretly picking and applying one or more exponents to mask one or more components of the proof. The blinded proof may be a designated-verifier, non-interactive zero-knowledge proof of knowledge. In particular, the proof may be also provided with an additional layer of encryption by applying a proof creation key during the malleation of the proof, so that the resulting blinded proof can only be verified using a proof verification key paired with the proof creation key. The second party may possess the proof verification key paired with the proof creation key and, therefore, may be the designated verifier of the blinded proof. Using the proof verification key, the second party may verify the blinded proof received from the first party. This embodiment may correspond to Figure 5 and the accompanying description below.

One or more of the zero-knowledge proofs of knowledge may be a non-interactive zero-knowledge proof of knowledge. For example, every zero-knowledge proof of knowledge may be a non-interactive zero-knowledge proof of knowledge.

The client computing device may check that the further zero-knowledge proof of knowledge in the third element of the ciphertext pertains to the same randomly generated number as the first element and the second element of the ciphertext. The client computing device may, for example, compute a third value ($\beta$) by inputting: (i) the generator of the cyclic group, (ii) the first element of the ciphertext, (iii) the first value ($\alpha$), and (iv) the second element of the ciphertext, into a random hashing function; and then check whether the generator of the cyclic group raised to the power of the second value ($\gamma$) equals a value obtained by multiplying the first value ($\alpha$) by the first element of the ciphertext raised to the power of the computed third value ($\beta$).

A first party share of the public key may be generated based on the first party's share of the secret key. The first party share of the public key may be used to generate the zero-knowledge proof of knowledge. The first party's share of the public key may be destroyed after use. For example, the first party's share of the public key may be generated responsive to receiving a request to decrypt the ciphertext and may be destroyed immediately after use.

Generating the zero-knowledge proof of knowledge based on the first party's share of the secret key may comprise generating two or more randomized values based on a generator of a cyclic group, the first party's share of the secret key, and the first party's share of the public key, using a randomly generated number and a random hashing function. The zero-knowledge proof of knowledge based on the first party's share of the secret key may be generated by: generating, at the first party, a random number within the size of a cyclic group; computing a fifth value ($\alpha'$) by raising a generator of the cyclic group to the power of the generated random number; computing a fourth value ($\beta'$) by inputting: (i) the generator, (ii) the first party's share of the public key, (iii) the fifth value ($\alpha'$), into a random hashing function; computing a sixth value ($\gamma'$) by multiplying the fourth value ($\beta'$) by the value of the first party's share of the secret key and subsequently adding the generated random value to it; wherein the fifth and sixth values comprise zero-knowledge proof of knowledge. Additionally, the computing of the fourth value ($\beta'$) may comprise further inputting: (iv) the first element of the ciphertext, (v) the second element of the ciphertext, and (vi) the third element of the ciphertext.

A decryption of the ciphertext may be generated using the first party's share of the secret key and the received information. The decryption may be obtained, for example, by generating a decryption of the second element of the ciphertext using a hashing function, the first party's share of the secret key, and the received information.

Before generating a decryption of the ciphertext using the first party's share of the secret key and the received information, the first party may receive a further zero-knowledge proof of knowledge and verifies that the received further proof of knowledge pertains to the second party's share of the secret key. The received zero-knowledge proof of knowledge may comprise, for example: (i) a seventh value ($\alpha$-u), (ii) a eighth value ($\alpha$-g), and (iii) a tenth value ($\gamma''$). The first party may check that the received proof of knowledge pertains to the second party's share of the secret key, for example, by: computing, at the first party, a ninth value ($\beta''$) by inputting: (i) the first element of the ciphertext; (ii) the generator; (iii) the first element of the ciphertext raised to the power of the second party's share of the public key; (iv) the second party's share of the public key; (v) the received seventh value ($\alpha$-u); and (vi) the received eighth value ($\alpha$-g), into a random hashing function; checking, at the first party: whether the first element of the ciphertext raised to the power of the received value of Gamma equals: the product of the received seventh value ($\alpha$-u) multiplied by the second party's share of the public key raised to the power of the computed ninth value ($\beta''$); and whether the generator raised to the power of the received tenth value ($\gamma''$), equals: the product of the received seventh value ($\alpha$-g) multiplied by the second party's share of the public key raised to the power of the computed ninth value ($\beta''$). The second party's share of the public key may be derived from the public key and the first party's share of the public key. In another embodiment, the first party generates a decryption of the ciphertext without verifying the further proof of knowledge. In yet another embodiment, the first party generates a decryption of the ciphertext without receiving any further proof of knowledge from the second party.

According to an embodiment, the further zero-knowledge proof of knowledge in the third element of the ciphertext may comprise a designated-verifier zero-knowledge proof of knowledge for the second party. The first party may hold an encryption key that encrypts information that can only be decrypted with a corresponding verification key. The second party may hold a verification key that decrypts information encrypted with a corresponding encryption key. Additionally, when generating or verifying the zero-knowledge proof of knowledge based on the first party's share of the secret key, both the first party and the second party may compute the fourth value ($\beta'$) by further inputting into the random hashing function: (iv) the first element of the ciphertext, and (v) the third element of the ciphertext.

**Brief Description of the Drawings**

The present disclosure will now be described in detail, with reference to the accompanying drawings, in which:

Figure 1 is a schematic diagram showing an example overall system architecture, including a server and a client device, for performing distributed decryption according to the present disclosure;

Figure 2 is a schematic diagram showing the client device from Figure 1;

Figure 3 is a schematic diagram showing the server device from Figure 1;

Figure 4 is a flow chart showing a distributed decryption process according to the present disclosure; and

Figure 5 is a flow chart showing a distributed decryption process with additional privacy-preserving features according to the present disclosure;

Figure 6 shows a schematic representation of a computer apparatus which can be used to perform methods described herein.

Like reference numerals are used for like components throughout the description and drawings.

**Detailed Description**

The present disclosure relates generally to improving security of decryption in distributed decryption systems, and in particular providing security against malicious parties to distributed decryption systems.

In distributed decryption systems, a secret key for performing decryption operations on ciphertext documents is distributed between two or more respective devices. Each device stores a respective share of the secret key. In order to decrypt a ciphertext document and thereby obtain the corresponding plaintext document, both shares of the secret key are needed. Therefore, a single device is not on its own able to decrypt the ciphertext document. In the present disclosure, we describe the principles of the present disclosure using two devices, each of which has a respective share of the secret key. However, as the reader will understand, the present disclosure could be implemented on any number of devices - for example three devices, four devices, or more, provided that each device has stored thereon a respective share of the secret key.

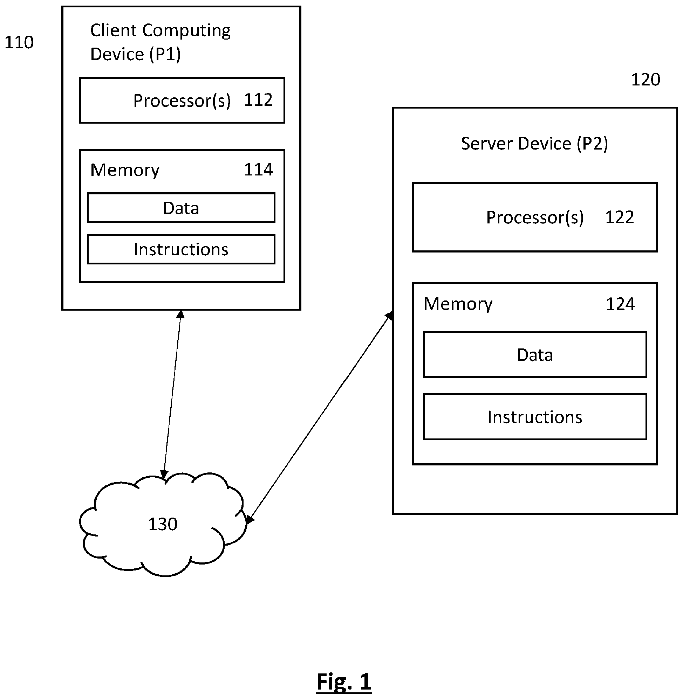

Figure 1 shows an example of a system architecture for implementing the distributed decryption according to present disclosure. It includes a network device 120 and a client device 110, connected to one another over a network 130. The network device 120 has one or more processors 122 and a memory 124 storing data and instructions. The client device 110 has one or more processors 112 and a memory 114 storing data and instructions.

The network device 120 may typically be a server device. However, in some examples, the network device may be a client device similar to device 110. The client device 110 may be a mobile phone, a tablet device, a laptop, or a PC. Hereafter, the network device 120 will be referred to a server device 120 for simplicity, in order to clearly distinguish from the client device 110. However, the reader will understand that the scope of the present disclosure is not limited thereto.

The network connection 130 may be a wired connection, or a wireless connection. For example, the network connection may be a WWAN connection (e.g. a 2G, 3G, 4G, 4G LTE, or 5G cellular connection), or a WLAN connection (e.g. WiFi). Where devices 110 and 120 are both client devices, the connection may even be a near field connection, such as Bluetooth. As the reader will understand, this is a non-exhaustive list of possible connections between the devices 110, 120.

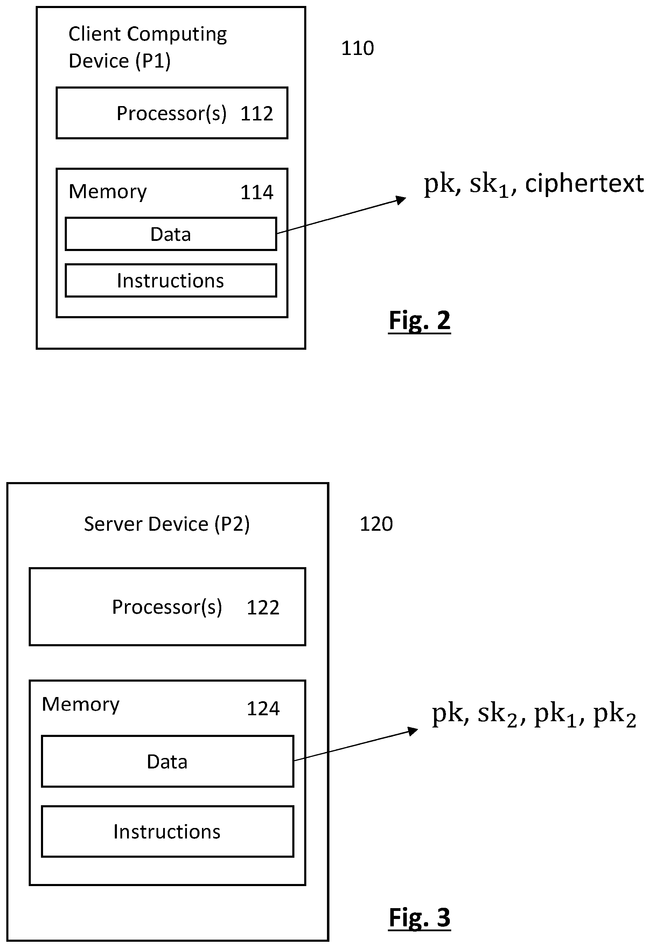

Figure 2 shows the example client device 110 (sometimes referred to herein as party 1, or "P1") in more detail. Figure 3 shows the example server device 120 (sometimes referred to herein as party 2, or "P2") in more detail. Data stored in the memory 124 of the server device 120 includes the full public key $pk$, the first party's share of the public key $pk_1$, the second party's share of the public key $pk_2$, and the second party's share of secret key $sk_2$. Data stored in the memory 114 of the client device 110 includes the full public key $pk$, the first party's share of secret key $sk_1$, and the ciphertext.

Figure 4 is a flowchart showing an embodiment of the present disclosure. A series of operations are depicted in the flowchart involving client device 110 and server device 120. Client device 110 acts as the first party P1 to the method and server device 120 acts as the second party P2 to the method. A number of the operations include data transfers between client device 110 and server device 120 performed over the network 130.

The flowchart in Figure 4 is an example method for decrypting a ciphertext according to the present disclosure. A ciphertext, also known as encrypted or encoded information, contains a form of a given original message that is unreadable by a human or a computer without the proper cipher to decrypt it. A cipher is an algorithm for performing encryption or decryption. Decryption, the inverse of encryption, is the process of turning a ciphertext into a readable message, known as plaintext.

The method makes use of non-interactive zero-knowledge proofs of knowledge of certain statements, in particular related to knowing certain discrete logarithms. Given a relation $\mathcal{R} \subseteq X \times W$, the equation $\pi = \text{NIZKPoK}[w \mid x \mid x \mathcal{R} w]$ denotes the proof that someone knows a value $w \in W$, such that the value $x$, known to the verifier of the proof, is related to $w$. The checking of this proof is denoted by check($\pi|x$), which returns either true or false. In the example method of Figure 4, NIZKPoK-s are used for the knowledge of discrete logarithms. These NIZKPoK-s come with associated data $D$, meaning that they are intended to be considered valid only within the scope of $D$. In turn, this means, that if someone tries to tamper with $D$, then this is noticed and the proof is considered invalid.

NIZKPoK-s are implemented with the use of random oracles. A random oracle $H: X \rightarrow \mathcal{Y}$ can be thought of as a random function. It is modelled as a box that takes queries $x \in X$ from anyone, and responds with elements of $\mathcal{Y}$. Internally, that box maintains the current partial mapping from $X$ to $\mathcal{Y}$, extending it whenever it is queried with an $x$ that it has not seen before. Implementations of random oracles are based on hash functions.

Let $H_1$ be a random oracle that takes any kinds of arguments (converted into bit-strings) into elements of $\mathbb{Z}_p$. The proof $\text{NIZKPoK}^D [x \mid g_1, \ldots, g_k, h_1, \ldots, h_k \mid \bigwedge_{i=1}^{k} g_i^x = h_i]$ is implemented as follows:

1. Randomly generate $r \in \mathbb{Z}_p$

2. For each $i$, compute $\alpha_i \leftarrow g_i^r$
3. Compute $\beta = H_1(g_1,\ldots,g_k, h_1,\ldots, h_k, \alpha_i, \alpha_k, D$
4. Compute $\gamma = r + \beta x$
5. Output $\alpha_i, \alpha_k, \gamma$

The verification of this NIZKPoK proceeds as follows:

1. Compute $\beta = H_1(g_1,\ldots, g_k, h_1,\ldots, h_k, \alpha_i, \ldots, \alpha_k, D$

2. For each $i$, check that $g_i^\gamma = \alpha_i \cdot h_i^\beta$.

*Equation i* shows an algorithm corresponding to Figure 4. The algorithm is the decryption protocol for a given ciphertext ($u, c, \pi$), wherein: $u$ represents the value obtained from raising the generator $g$ to the power of a randomly generated number $r$; $c$ represents the encryption of the plaintext; $\pi$ represents the zero-knowledge proof of knowledge based on the first element $u$. The algorithm uses hashing function $H$ as random oracle for its proofs and returns the plaintext $m$.

```
Data: pk, sk₁, and (u, c, π) (for P₁)
Data: pk, sk₂, pk₁, pk₂ (for P₂)
Result: the plaintext m (for P₁)
P₁ does the following
begin
    checkᶜ(π|g, u)
    pk₁ ← g^{sk₁}                            /* Cannot be stored in the phone */
    π₂ ← NIZKPoK^{u,c,π}[sk₁|g, pk₁ | g^{sk₁} = pk₁]
    Send u, c, π, π₂ to P₂
P₂ does the following
begin
    checkᶜ(π|g, u); check^{u,c,π}(π₂|u₁, u₂, g, pk₁)
    w ← u^{sk₂}
    τ ← NIZKPoK[sk₂|u, w, g, pk₂ | u^{sk₂} = w ∧ g^{sk₂} = pk₂]
    Send w, τ to P₁
P₁ does the following
begin
    check(τ|u, w, g, pk/pk₁)
    Return c ⊕ H(u^{sk₁} · w)
```

## Equation i

Figure 4 illustrates an example method between only two parties. The method may be performed by, for example, a client computing device 110 as the first party P1 and a server device 120 as the second party P2. The method may nevertheless involve two or more parties. For example, the method may involve a server device acting as the second party and one or more client computing devices behaving like the first party.

At operation 310, the client computing device 110 checks that the non-interactive zero-knowledge proof of knowledge in the third element of the ciphertext (i.e. element $\pi$ of the ciphertext ($u$, $c$, $\pi$) from *Equation i*) is a zero-knowledge proof of knowledge based on the first element of the ciphertext (i.e. element $u$ of the ciphertext ($u$, $c$, $\pi$) from *Equation i*). Operation 310 is implemented by line 3 of *Equation i*. The verification of this NIZKPoK proceeds as follows:

1. Compute $\beta = H(g, u, \alpha, c)$
2. Check that $g^\gamma = \alpha\, u^\beta$

At operation 312, the client computing device 110 computes the first party's share of the public key $pk_1$ based on the first party's share of the secret key $sk_1$. Operation 312 is implemented by line 4 of *Equation i*. The first party's share of the public key $pk_1$ is computed by raising the generator $g$ to the power of the first party's share of the secret key $sk_1$.

At operation 314, the client computing device 110 generates a zero-knowledge proof of knowledge $\pi_2$ based on the first party's share of the secret key $sk_1$. Operation 314 is implemented by line 5 of *Equation i*. The generation of non-interactive zero-knowledge proof of knowledge $\pi_2$ is implemented as follows:

1. Randomly generate $r_1 \in \mathbb{Z}_p$
2. Compute $\alpha_1 \leftarrow g^{r_1}$
3. Compute $\beta_1 = H(g, pk_1, \alpha_1, u, c, \pi)$
4. Compute $\gamma_1 = r_1 + \beta_1\, sk_1$
5. Output $\alpha_1, \gamma_1$

At operation 316, the client computing device 110 sends the ciphertext ($u$, $c$, $\pi$) and the generated zero-knowledge proof of knowledge $\pi_2$ to the server device 120 over the network 130. The server device 120 receives the ciphertext ($u$, $c$, $\pi$) and the generated zero-knowledge proof of knowledge $\pi_2$ from the client computing device 110. Operation 316 is implemented by line 6 of *Equation i*.

At operation 318, the server device 120 checks that the non-interactive zero-knowledge proof of knowledge in the third element of the ciphertext (i.e. element $\pi$ of the ciphertext *(u, c, π)* from *Equation i*) is a zero-knowledge proof of knowledge based on the first element of the ciphertext (i.e. element $u$ of the ciphertext ($u$, $c$, $\pi$) from *Equation i*). Operation 318 is implemented by the first check in line 9 of *Equation i*. The verification of this NIZKPoK proceeds as follows:

1. Compute $\beta = H(g, u, \alpha, c)$
2. Check that $g^\gamma = \alpha\, u^\beta$

At operation 320, the server device 120 checks that the received zero-knowledge proof of knowledge $\pi_2$ is a zero-knowledge proof of knowledge based on the first party's share of the secret key $sk_1$. Operation 320 is implemented by the second check in line 9 of *Equation i.* The verification of this NIZKPoK proceeds as follows:

1. Compute $\beta_1 = H(g, pk_1, \alpha_1, u, c, \pi)$

2. Check that $g^{\gamma_1} = \alpha_1 \cdot pk_1^{\beta_1}$

At operation 322, the server device 120 computes a value w based on the second party's share of the secret key $sk_2$. Operation 322 is implemented by line 10 of *Equation i.* The value assigned to the variable named w is obtained by raising the first element of the ciphertext (i.e. element $u$ of the ciphertext $(u, c, \pi)$ from *Equation i*) to the power of the second party's share of the secret key $sk_2$.

At operation 324, the server device 120 generates a zero-knowledge proof of knowledge $\tau$ based on the second party's share of the secret key $sk_2$. Operation 324 is implemented by line 11 of *Equation i.* The generation of non-interactive zero-knowledge proof of knowledge $\tau$ is implemented as follows:

1. Randomly generate $r_2 \in \mathbb{Z}_p$
2. Compute $\alpha_u \leftarrow u^{r_2}$
3. Compute $\alpha_g \leftarrow g^{r_2}$
4. Compute $\beta_2 = H(u, g, u^{pk_2}, pk_2, \alpha_u, \alpha_g)$
5. Compute $\gamma_2 = r_2 + \beta_2 \, sk_2$
6. Output $\alpha_u, \alpha_g, \gamma_2$

At operation 326, the server device 120 sends the value w and the generated zero-knowledge proof of knowledge $\tau$ to the client computing device 110 over the network 130.

The client computing device 110 receives the value w and the generated zero-knowledge proof of knowledge $\tau$ from the server device 120. Operation 326 is implemented by line 12 of *Equation i.*

At operation 328, the client computing device 110 checks that the received zero-knowledge proof of knowledge $\tau$ is a zero-knowledge proof of knowledge based on the second party's share of the secret key $sk_2$. Operation 328 is implemented by line 15 of *Equation i.* The verification of this NIZKPoK proceeds as follows:

1. Compute $\beta_2 = H(u, g, u^{pk_2}, pk_2, \alpha_u, \alpha_g)$

2. Check that $u^{\gamma_2} = \alpha_u \cdot pk_2^{\beta_2}$

3. Check that $g^{\gamma_2} = \alpha_g \cdot pk_2^{\beta_2}$

The client computing device 110 derives the second party's share of the public key $pk_2$ from the public key $pk$ and the first party's share of the public key $pk_1$. In particular, the second party's share of the public key $pk_2$ is obtained by dividing the public key $pk$ by the first party's share of the public key $pk_1$.

At operation 330, the client computing device 110 generates a decryption of the second element of the ciphertext (i.e. element c of the ciphertext $(u, c, \pi)$ from *Equation i*) based on the first party's share of the secret key $sk_1$ and the received value w. Operation 330 is implemented by line 16 of *Equation i.* The first element $u$ of the ciphertext $(u, c, \pi)$ is raised to the power of the first party's share of the secret key $sk_1$. The value resulting from this operation is then multiplied by the received value w, wherein w corresponds to the first element $u$ of the ciphertext $(u, c, \pi)$ raised to the power of the second party's share of the secret key $sk_2$. The product of the multiplication is then inputted into the hashing function $H$. Finally, the ciphertext $c$ is decrypted by applying the $\oplus$ operation between $c$ and the output of the hashing function $H$.

At operation 332, the client computing device 110 obtains the plaintext corresponding to the second element of the ciphertext (i.e. the plaintext corresponding to element $c$ of the ciphertext $(u, c, \pi)$ from *Equation i*). The plaintext $m$ corresponds to the decryption of ciphertext $c$ obtained in operation 330. The plaintext $m$ contains the original message that was encrypted by the issuer of the ciphertext $(u, c, \pi)$.

The setup for the cryptographic scheme used in the example of Figure 4 and the algorithm in Equation i will now be described.

When using ElGamal encryption, a cyclic group $\mathbb{G}$ with a hard Decisional Diffie-Hellman (DDH) problem is used, e.g. some subgroup of the group of points of an elliptic curve. For example, let $g$ be a generator of the group and $p$ the number of elements in the group. Both $g$ and $p$ are known to all parties. Then, in this ElGamal encryption scheme, the secret key is a random value $sk \in \mathbb{Z}_p$, where $\mathbb{Z}_p$ denotes the set of integers *modulo p*. The corresponding public key is $h = g^{sk}$.

$\mathbb{G}$. To encrypt a message $m \in \mathbb{G}$, the sender generates a random $r \in \mathbb{Z}_p$ and computes the ciphertext $(c_1, c_2) = (g^r, m \, h^r)$. To decrypt the ciphertext $(c_1, c_2)$, the receiver must compute $c_1^{sk}$ and then find $m = c_2/c_1^{sk}$.

In the example of Figure 4 and the algorithm in Equation i, we use an alternate setting called hash-ElGamal encryption. Possible plaintexts are bit-strings of a given length n. In this case, a hash function $H: \mathbb{G} \to \{0, 1\}^n$ is used. The hash function is modelled after a random oracle, i.e. its outputs are perfectly random. To encrypt a message $m \in \{0, 1\}^n$, the sender generates a random $r \in \mathbb{Z}_p$ and computes the ciphertext $(c_1, c_2) = (g^r, m \, Hh^r))$. To decrypt the ciphertext $(c_1, c_2)$, the receiver must compute $c_1^{sk}$ and then find $m = c_2 \oplus H(c_1^{sk})$.

As decryption is distributed, the public key may also be generated in a distributed manner. In an embodiment that includes *k* parties, each one of them selects a random $sk_i \in \mathbb{Z}_p$ as their respective share *sk_i* of the secret key *sk*. Each party then computes its public-key share *pk_i* = *g^{ai}* and sends it to the other parties (or, alternatively, to a certification authority trusted by all parties to publish the public key *pk*). The product *pk* = *g^{ai}* ⋯ *g^{ak}* is the public key. The corresponding secret key is *sk* = *sk_1* + ⋯ + *sk_k*. *sk* materialise at any point during the decryption process, thereby providing the distributed system with an additional safeguard in case of interceptions from malicious actors or other types of data breaches.

The decryption protocol between P1 and P2 given in *Equation i* relies on the assumption that the previous phases of *Setup, Key Generation* and *Encryption* have already been completed ahead of its execution. The *Setup* phase includes: the generation of cyclic group $\mathbb{G}$ using generator *g* with hard DDH problem; and the selection of hash function $H: \mathbb{G} \to \{0, 1\}^n$ modelled after a random oracle. In the *Key Generation* phase, P1 randomly selects $sk_1 \in \mathbb{Z}_p$ and P2 randomly selects $sk_2 \in \mathbb{Z}_p$. The phone P1 stores only *pk* and *sk_1*. The phone does not store *pk_1* to prevent malicious actors from verifying a guess of *sk_1* by matching it against *sk_1*, in case of an interception or a data breach. The server P2 stores *pk, sk_2* and may also store *pk_1* and *pk_2* for the purpose of speeding up its computations. During the *Encryption* phase, the random number $r \in \mathbb{Z}_p$ is generated and then used in both the first element *u* and second element *c* of the ciphertext $(u, c, \pi)$. The third element $\pi$ of the ciphertext is used to prove to both P1 and P2 that the same randomly generated r was used in the first and second elements of the ciphertext. The verification of $\pi$ by either P1 or P2 provides protection from CCA, which rely on *c* being handpicked by the attacker. Once P1 has been provided with the ciphertext, the decryption protocol of *Equation i* may be initiated.

Figure 5 is a flowchart showing a further embodiment according to the present disclosure. A series of operations are depicted in the flowchart involving client device 110 and server device 120. Client device 110 acts as the first party P1 to the method and server device 120 acts as the second party P2 to the method. A number of the operations include data transfers between client device 110 and server device 120 performed over the network 130.

The flowchart in Figure 5 is a more elaborate example method for decrypting a ciphertext, and includes additional privacy-preserving features relative to the method of Figure 4. In particular, in the example method of Figure 5 the first party P1 only sends a blinded version of the ciphertext to the second party P2. The blinded ciphertext comprises a masked version of the first element *u* of the original ciphertext and a malleated version of the proof in the third element $\pi$ of the original ciphertext, while the second element *c* of the original ciphertext is omitted altogether. This means that, not only does P2 never see the encrypted message itself (i.e. the second element of the original ciphertext), but potential listeners are also denied the opportunity to acquire it as it is not transmitted over network 130 for the duration of the protocol. Further, the remaining elements of the original ciphertext are only sent to P2 via network 130 in an altered form and the malleated proof is a designated-verifier proof that can only be verified by P2. Therefore, the combination of privacy-preserving techniques used in the example method of Figure 5 results in every part of the original ciphertext being highly inaccessible to an attacker.

*Equation j* shows an algorithm corresponding to Figure 5. The algorithm is the decryption protocol for a given ciphertext $(u, c, \pi)$, wherein: *u* represents the value obtained from raising the generator *g* to the power of a randomly generated number *r*; *c* represents the encryption of the plaintext; $\pi$ represents the zero-knowledge proof of knowledge based on the first element *u*. The algorithm uses hashing function *H* as random oracle for its proofs and returns the plaintext *m*. Unlike the algorithm of *Equation i,* in the algorithm shown in *Equation j* the third element $\pi$ of the ciphertext appears as a string $(\alpha_1, \Gamma_1, \Gamma_2)$. Additionally, a proof creation key $(ek, B_1, B_2)$ is used by P1 for generating a designated-verifier proof and a verification key $(\beta, vk)$ is used by P2 for checking the proof.

**Data:** $pk$, $sk_1$, $(u, c, \alpha_1, \Gamma_1, \Gamma_2)$, $ek$, $B_1$, $B_2$ (for $P_1$)
**Data:** $pk$, $sk_2$, $pk_1$, $pk_2$, $\beta$, $vk$ (for $P_2$)
**Result:** the plaintext $m$ (for $P_1$)
$P_1$ does the following

```
begin
    pk₁ ← g^{sk₁}                                        /* Cannot be stored in the phone */
    z ←$ ℤ_p
    u' ← u^z
    (α'₁, (Γ'₁, Γ'₂)) ← dvmall(g; u; (α₁, (Γ₁, Γ₂)); z; (ek, B₁, B₂))
    ((α₄, α''_r), γ₄, g'', h'') ← mkPse'(g; pk₁; sk₁; u', α'₁, Γ'₁, Γ'₂)
    Send u', α'₁, Γ'₁, Γ'₂, g'', α₄, α''₄, γ₄ to P₂
```

$P_2$ does the following

```
begin
    dvCkP2(g; u'; (α'₁, (Γ'₁, Γ'₂)); vk, β)
    h'' ← H(g, pk₁, α₄, u', α'₁, Γ'₁, Γ'₂)               /* Computed as by mkPse' */
    ckPse'(g; pk₁; u', α'₁, Γ'₁, Γ'₂; ((α₄, α''₄), γ₄, g'', h''))
    w ← (u')^{sk₂}
    ((α₅₁, α₅₂), γ₅) ← mkP(u', pk₁; w, pk; sk₂; empty)
    Send w, α₅₁, α₅₂, γ₅ to P₁
```

$P_1$ does the following

```
begin
    ckP(u', pk₁; w, pk; empty; ((α₅₁, α₅₂), γ₅))
    /* Destroy pk₁                                                              */
    Return c ⊕ H(w^{sk₁/z})                              /* z is inverted modulo p */
```

**Algorithm 29:** Decryption (folded)

## Equation j

Figure 5 illustrates an example method between only two parties. The method may be performed by, for example, a client computing device 110 as the first party P1 and a server device 120 as the second party P2. The method may nevertheless involve two or more parties. For example, the method may involve a server device acting as the second party and one or more client computing devices behaving like the first party.

Before execution of the algorithm, the client computing device 110 may check that the non-interactive zero-knowledge proof of knowledge in the third element of the ciphertext (i.e. string ($\alpha_1$, $\Gamma_1$, $\Gamma_2$) from *Equation j*) is a zero-knowledge proof of knowledge based on the first element of the ciphertext (i.e. element $u$ of the ciphertext from *Equation j*).

At operation 510, the client computing device 110 computes the first party's share of the public key $pk_1$ based on the first party's share of the secret key $sk_1$. Operation 510 is implemented by line 2 of *Equation j*. The first party's share of the public key $pk_1$ is computed by raising the generator $g$ to the power of the first party's share of the secret key $sk_1$.

At operation 512, the client computing device 110 randomly picks an exponent $z$, which is kept secret by P1 for the duration of the protocol, and applies $z$ to the first element $u$ of the ciphertext. Operation 512 is implemented by lines 3 and 4 of *Equation j*. The resulting $u'$, obtained by raising $u$ to the power of $z$, is treated as a masked version of the first element $u$ of the ciphertext.

At operation 514, the client computing device 110 malleates the proof in the third element ($\alpha_1$, $\Gamma_1$, $\Gamma_2$) of the ciphertext. As part of this process, the proof is malleated using proof creation key $ek$, which is part of a keypair that includes proof creation key $ek$ and proof verification key $vk$. The resulting malleated proof is therefore also a designated-verifier proof, i.e. it is only verifiable using the proof verification key $vk$. The proof verification key $vk$ is a secret key held by P2.

Operation 514 is implemented by line 5 of *Equation j*, where string ( $\alpha'_1, \Gamma'_1, \Gamma'_2$ ) is the resulting designated-verifier malleated proof. The string ( $\alpha'_1, \Gamma'_1, \Gamma'_2$ ) is obtained by malleating the proof in the third element ( $\alpha_1, \Gamma_1, \Gamma_2$ ) of the ciphertext as follows:

1. Compute $\alpha'_1 \leftarrow \alpha_1^z \cdot g^{z' \bmod p}$, wherein $z' \overset{\$}{\leftarrow} \mathbf{I}(\rho + 2d + 2\kappa)$

2. Compute $\Gamma'_1 \leftarrow \Gamma_1^z \cdot \mathcal{E}_{ek}(z')$

3. Compute $\Gamma'_2 \leftarrow \Gamma_2^z \cdot \mathcal{E}_{ek}(z')$

4. Output ( $\alpha_1', \Gamma_1', \Gamma_2'$ )

Here, $\mathbf{I}(p+2d+2\kappa)$ indicates the set of integers with a number of bits equal to $p+2d+2\kappa$. The value $d$ corresponds to the number of bits for the size $p$ of cyclic group $\mathbb{G}$. Additionally, $\rho$ and $\kappa$ are fixed security parameters for soundness and privacy of the scheme. Typical values for these parameters are between 80 and 128 (or 256). It can normally be assumed that $\rho \leq \kappa \leq d$.

At operation 516, the client computing device 110 composes a blinded version of the ciphertext using the masked first element $u'$ and the designated-verifier malleated proof. Notably, the second element c of the original ciphertext does not feature in the blinded version. Operation 516 is a conceptual step that is useful for understanding the following steps in the algorithm of *Equation j* and therefore the operation itself does not appear in the pseudocode. The resulting blinded ciphertext appears in line 7 of *Equation j* as string ( $u', \alpha_1', \Gamma_1', \Gamma_2'$ ).

At operation 518, the client computing device 110 generates a non-interactive zero-knowledge proof of knowledge $\pi_2$ based on the first party's share of the secret key $sk_1$. Operation 518 is implemented by line 6 of *Equation j,* where proof $\pi_2$ is generated in the form of proof string ($g''$, $\alpha_4$, $\alpha_4''$, $\gamma_4$) as follows:

1. Randomly generate $r_4 \overset{\$}{\leftarrow} \mathbb{Z}_p$

2. Compute $\alpha_4 \leftarrow g^{r_4}$

3. Compute $h'' \leftarrow H_3(g, pk_1, \alpha_4, u', \alpha_1', \Gamma_1', \Gamma_2')$, where $h'' \in \mathbb{G}$

4. Compute $g'' \leftarrow (h'')^{1/sk_1}$

5. Compute $\alpha_4'' \leftarrow (g'')^{r_4}$

6. Compute $\beta_4 \leftarrow H_4(g, g'', pk_1, h'', \alpha_4, \alpha_4'', u', \alpha_1', \Gamma_1', \Gamma_2')$, where $\beta_4 \in \mathbb{Z}_p \, \beta_4$

7. Compute $\gamma_4 \leftarrow r_4 + \beta_4 \cdot sk_1$

8. Output ($g''$, $\alpha_4$, $\alpha_4''$, $\gamma_4$)

At operation 520, the client computing device 110 sends the blinded ciphertext ($u'$, $\alpha_1', \Gamma_1', \Gamma_2'$) and the generated proof string ($g''$, $\alpha_4$, $\alpha_4''$, $\gamma_4$) to the server device 120 over the network 130. The server device 120 receives the ciphertext ($u'$, $\alpha_1', \Gamma_1', \Gamma_2'$) and the generated proof string ($g''$, $\alpha_4$, $\alpha_4''$, $\gamma_4$) from the client computing device 110. Operation 520 is implemented by line 7 of *Equation j.*

At operation 522, the server device 120 checks that the received designated-verifier malleated proof ($\alpha_1'$, $\Gamma_1'$, $\Gamma_2'$) is a zero-knowledge proof of knowledge based on the first element of the ciphertext (i.e. element $u$ of the ciphertext from *Equation j*). In order to verify the designated-verifier malleated proof, P2 must use its verification key ($\beta$, vk). Operation 522 is implemented by line 9 of *Equation j.* The verification of this proof proceeds as follows:

1. Check that $\mathcal{D}_{vk}(\Gamma_1') = \mathcal{D}_{vk}(\Gamma_2')$

2. If check fails, the proof is rejected; if check passes, check that $\alpha_1' \cdot (u')^{\beta} = g^{\mathcal{D}_{vk}(\Gamma_1')}$

3. If check fails, the proof is rejected; if check passes, the proof is accepted

At operation 524, the server device 120 checks that the received proof string ($g''$, $\alpha_4$, $\alpha_4''$, $\gamma_4$), also known as proof $\pi_2$, is a non-interactive zero-knowledge proof of knowledge based on the first party's share of the secret key $sk_1$. Operation 524 is implemented by lines 10 and 11 of *Equation j.* The verification of this NIZKPoK proceeds as follows:

1. Compute $h'' \leftarrow H_3(g, pk_1, \alpha_4, u', \alpha_1', \Gamma_1', \Gamma_2')$

2. Compute $\beta_4 \leftarrow H_4(g, g'', pk_1, h'', \alpha_4, \alpha_4'', u', \alpha_1', \Gamma_1', \Gamma_2')$

3. Check that $g^{\gamma_4} = \alpha_4 \cdot pk_1^{\beta_4}$

4. If check fails, the proof is rejected; if check passes, check that $(g'')^{\gamma_4} = \alpha_4'' \cdot (h'')^{\beta_4}$

5. If check passes, the proof is accepted

At operation 526, the server device 120 computes a value w based on the second party's share of the secret key $sk_2$. Operation 526 is implemented by line 12 of *Equation j*, where the value assigned to the variable named w is obtained by raising the first element of the blinded ciphertext (i.e. the masked first element *u'* of the ciphertext from *Equation j*) to the power of the second party's share of the secret key $sk_2$.

At operation 528, the server device 120 generates a non-interactive zero-knowledge proof of knowledge $\tau$ based on the second party's share of the secret key $sk_2$. Operation 528 is implemented by line 13 of *Equation j*, where proof $\tau$ is generated in the form of proof string $(\alpha_{51}, \alpha_{52}, \gamma_5)$ as follows:

1. Randomly generate $r_5 \xleftarrow{\$} \mathbb{Z}_p$

2. Compute $\alpha_{51} \leftarrow (u')^{r_5}$

3. Compute $\alpha_{52} \leftarrow pk_1^{r_5}$

4. Compute $\beta_5 \leftarrow H_5 (u', pk_1, w, pk, \alpha_{51}, \alpha_{52})$, where $\beta_5 \in \mathbb{Z}_p$
5. Compute $\gamma_5 \leftarrow r_5 + \beta_5 \cdot sk_2$
6. Output $(\alpha_{51}, \alpha_{52}, \gamma_5)$

At operation 530, the server device 120 sends the value *w* and the generated proof string $(\alpha_{51}, \alpha_{52}, \gamma_5)$ to the client computing device 110 over the network 130. The client computing device 110 receives the value *w* and proof string $(\alpha_{51}, \alpha_{52}, \gamma_5)$ from the server device 120. Operation 530 is implemented by line 14 of *Equation j*.

At operation 532, the client computing device 110 checks that the received proof string $(\alpha_{51}, \alpha_{52}, \gamma_5)$, also known as proof $\tau$, is a non-interactive zero-knowledge proof of knowledge based on the second party's share of the secret key $sk_2$. Operation 532 is implemented by line 16 of *Equation j*. The verification of this NIZKPoK proceeds as follows:

1. Compute $\beta_5 \leftarrow H_5 (u', pk_1, w, pk, \alpha_{51}, \alpha_{52})$
2. Check that $(u')^{\gamma_5} = \alpha_{51} \cdot w^{\beta_5}$

3. If check fails, the proof is rejected; if check passes, check that $pk_1^{\gamma_5} = \alpha_{52} \cdot pk^{\beta_5}$

4. If check passes, the proof is accepted

At operation 534, the client computing device 110 generates a decryption of the second element of the original ciphertext (i.e. element c of the ciphertext from *Equation j*) based on the first party's share of the secret key $sk_1$ and the received value w. Operation 534 is implemented by line 17 of *Equation j*. The received value w is raised to the power of the first party's share of the secret key $sk_1$ divided by exponent *z*. The value resulting from this operation is then inputted into the hashing function *H*. Finally, the ciphertext *c* is decrypted by applying the $\oplus$ operation between *c* and the output of the hashing function *H*.

At operation 536, the client computing device 110 obtains the plaintext corresponding to the second element of the original ciphertext (i.e. the plaintext corresponding to element *c* of the ciphertext from *Equation j*). The plaintext *m* contains the message that was encrypted by the issuer of the original ciphertext.

The resulting protocol is given in *Equation k*, which unfolds all the operations shown in *Equation j*. The protocol featured in *Equation k* is the same scheme given in *Equation j*, but it is simply shown in full by listing every step explicitly thereby removing calls to subroutines.

**Data:** $pk$, $sk_1$, $(u, c, \alpha_1, \Gamma_1, \Gamma_2)$, $ek$ (for $P_1$)
**Data:** $pk$, $sk_2$, $pk_1$, $pk_2$, $\beta$, $vk$ (for $P_2$)
**Result:** the plaintext $m$ (for $P_1$)
$P_1$ does the following

**begin**

$pk_1 \leftarrow g^{sk_1}$                                   `/* Cannot be stored in the phone */`

$z \xleftarrow{\$} \mathbb{Z}_p$ and $z' \xleftarrow{\$} \mathbf{I}(\rho + 2d + 2\kappa)$

$u' \leftarrow u^z$ and $\alpha_1' \leftarrow \alpha_1^z \cdot g^{z' \bmod p}$

$\Gamma_1' \leftarrow \Gamma_1^z \cdot \mathcal{E}_{ek}(z')$ and $\Gamma_2' \leftarrow \Gamma_2^z \cdot \mathcal{E}_{ek}(z')$

$r_4 \xleftarrow{\$} \mathbb{Z}_p$

$\alpha_4 \leftarrow g^{r_4}$

$h'' \leftarrow H_3(g, pk_1, \alpha_4, u', \alpha_1', \Gamma_1', \Gamma_2')$, where $h'' \in \mathbb{G}$

$g'' \leftarrow (h'')^{1/sk_1}$

$\alpha_4'' \leftarrow (g'')^{r_4}$

$\beta_4 \leftarrow H_4(g, g'', pk_1, h'', \alpha_4, \alpha_4'', u', \alpha_1', \Gamma_1', \Gamma_2')$, where $\beta_4 \in \mathbb{Z}_p$

$\gamma_4 \leftarrow r_4 + \beta_4 \cdot sk_1$

Send $u', \alpha_1', \Gamma_1', \Gamma_2', g'', \alpha_4, \alpha_4'', \gamma_4$ to $P_2$

$P_2$ does the following

**begin**

$\gamma \leftarrow \mathcal{D}_{vk}(\Gamma_1')$

Check that $\gamma = \mathcal{D}_{vk}(\Gamma_2')$

Check that $\alpha_1' \cdot (u')^\beta = g^\gamma$

$h'' \leftarrow H_3(g, pk_1, \alpha_4, u', \alpha_1', \Gamma_1', \Gamma_2')$

$\beta_4 \leftarrow H_4(g, g'', pk_1, h'', \alpha_4, \alpha_4'', u', \alpha_1', \Gamma_1', \Gamma_2')$

Check that $g^{\gamma_4} = \alpha_4 \cdot pk_1^{\beta_4}$ and $(g'')^{\gamma_4} = \alpha_4'' \cdot (h'')^{\beta_4}$

$w \leftarrow (u')^{sk_2}$

$r_5 \xleftarrow{\$} \mathbb{Z}_p$

$\alpha_{51} \leftarrow (u')^{r_5}$

$\alpha_{52} \leftarrow pk_1^{r_5}$

$\beta_5 \leftarrow H_5(u', pk_1, w, pk, \alpha_{51}, \alpha_{52})$, where $\beta_5 \in \mathbb{Z}_p$

$\gamma_5 \leftarrow r_5 + \beta_5 \cdot sk_5$

Send $w, \alpha_{51}, \alpha_{52}, \gamma_5$ to $P_1$

$P_1$ does the following

**begin**

$\beta_5 \leftarrow H_5(u', pk_1, w, pk, \alpha_{51}, \alpha_{52})$

Check that $(u')^{\gamma_5} = \alpha_{51} \cdot w^{\beta_5}$ and $pk_1^{\gamma_5} = \alpha_{52} \cdot pk^{\beta_5}$

`/* Destroy` $pk_1$                                                    `*/`

**Return** $c \oplus H(w^{sk_1/z})$                     `/*` $z$ `is inverted modulo` $p$ `*/`

**Algorithm 3:** Decryption

The setup for the cryptographic scheme used in the example of Figure 5 and the algorithm in *Equation j* will now be described. The ElGamal scheme is used for encryption and decryption. When using ElGamal encryption, a cyclic group $\mathbb{G}$ with a hard Decisional Diffie-Hellman (DDH) problem is used, e.g. some subgroup of the group of points of an elliptic curve. For example, let *g* be a generator of the group and *p* the number of elements in the group. Both *g* and *p* are known to all parties. Then, in this ElGamal encryption scheme, the secret key is a random value $sk \in \mathbb{Z}_p$, where $\mathbb{Z}_p$ denotes the set of integers *modulo p*. The corresponding public key is *h* = *g*$^{sk}$. $\mathbb{G}$. To encrypt a message $m \in \mathbb{G}$, the sender generates a random $r \in \mathbb{Z}_p$ and computes the ciphertext ($c_1$, $c_2$) = ($g^r$, $m \cdot h^r$). To decrypt the ciphertext ($c_1$, $c_2$), the receiver must compute $c_1^{sk}$ and then find $m = c_2/c_1^{sk}$ .

In the example of Figure 5 and the algorithm in *Equation j*, we use an alternate setting called hash-ElGamal encryption. Possible plaintexts are bit-strings of a given length *n*. In this case, a hash function $H: \mathbb{G} \rightarrow \{0, 1\}^n$ is used. The hash function is modelled after a random oracle, i.e. its outputs are perfectly random. To encrypt a message *m* ∈ {0, 1}$^n$, the sender generates a random $r \in \mathbb{Z}_p$ and computes the ciphertext ($c_1$, $c_2$) = ($g^r$, *m Hh$^r$*)). To decrypt the ciphertext

$(c_1, c_2)$, the receiver must compute $c_1^{sk}$ and then find $m = c_2 \oplus H(c_1^{sk})$.

As decryption is distributed, the public key may also be generated in a distributed manner. In an embodiment that includes 2 parties, each one of them selects a random $sk_i \in \mathbb{Z}_p$ as their respective share $sk_i$ of the secret key $sk$. Each party then computes its public-key share $pk_i = g^{ai}$ and sends it to the other parties (or, alternatively, to a certification authority trusted by all parties to publish the public key $pk$). In this privacy-preserving variant of the scheme, the public key is defined as $pk = (g^{sk1})^{sk2}$. The corresponding secret key is $sk = sk_1 \cdot sk_2$. Hence, the secret key is multiplicatively shared, not additively. However, the full secret key $sk$ does again not materialise at any point during the decryption process, thereby still providing the distributed system with an additional safeguard in case of interceptions from malicious actors or other types of data breaches.

The decryption protocol between P1 and P2 given in *Equation j* relies on the assumption that the previous phases of *Setup, Key Generation* and *Encryption* have already been completed ahead of its execution.

The *Setup* phase includes: the generation of cyclic group $\mathbb{G}$ of size $p$ (a prime number) using generator $g$ with hard DDH problem; and the selection of hash function $H: \mathbb{G} \to \{0, 1\}^n$ modelled after a random oracle.

The size $p$ of cyclic group $\mathbb{G}$ is $d$ bits long. Further, two fixed security parameters $\rho$ and $\kappa$ are chosen for soundness and privacy of the scheme. Typical values for these parameters range between 80 and 128 (or 256), and it normally is assumed that $\rho \le \kappa \le d$.

Throughout the protocol, there are six different types of invocations to hash function $H$. These are denoted as $H$, $H_1, H_2, H_3, H_4, H_5$. Different invocations have different output types:

- $H$ returns a bit-string of the same length as the plaintext $m$
- $H_1$ and $H_3$ return an element of $\mathbb{G}$
- $H_2$ returns an integer of length $\rho$
- $H_4$ and $H_5$ return an element of $\mathbb{Z}_p$

In the *Key Generation* phase, Phone P1 randomly chooses $sk_1 \in \mathbb{Z}_p$ and server P2 randomly chooses $sk_2 \in \mathbb{Z}_p$. Then, they send $pk_1 = g^{sk1}$ and $pk_2 = g^{sk2}$ to each other. Let $pk = pk_1^{sk_2} = pk_2^{sk_1}$. The phone P1 stores only $pk$ and $sk_1$, the latter encrypted with a low-entropy symmetric key. The server P2 stores $pk$, $sk_2$, and, for speeding up its computations, also $pk_1$ and $pk_2$. The phone P1 may not store neither $pk_1$ nor $pk_2$, because a guess of $sk_1$ can be matched against either of them.

The private key of the system is shared multiplicatively, not additively. This is as confidentiality-preserving as additive sharing, because $p$ - the size of the group $\mathbb{G}$ - is a prime number.

The server P2 also generates the DVNIZK key $((ek, B_1), (vk, \beta))$, where $\beta \le 2^\rho$, homomorphic cryptosystem, and sends the public part to the phone P1. The server P2 computes a different encryption $B_2 = \varepsilon_{ek}(\beta)$, and sends this one to the phone P1 as well. The server P2 then proves to the phone P1 that $(ek, B_1)$ is correctly formed, and $B_1$ and $B_2$ encrypt the same plaintext. The proof of equality of plaintexts must make use of the random oracle $H$ somehow. The phone P1 may sign $(ek, B_1, B_2)$; let $\sigma$ be the signature.

Without wishing to be bound by theory, a Paillier cryptosystem, or a Damgård-Jurik cryptosystem, may for example be used. Both Paillier cryptosystems, and Damgård-Jurik cryptosystems, are homomorphic. See, for example, Damgård [Ivan Damgård, Nelly Fazio, Antonio Nicolosi: "Non-interactive Zero-Knowledge from Homomorphic Encryption". Proceedings of the Theory of Cryptography Conference (TCC) 2006: 41-59, Sec. 6].

As a result, the entire public key is $(svk, pk, ek, B_1, B_2, \sigma)$. The phone P1 holds the private value $sk_1$. The server P2 holds the private values $sk_2, vk, \beta$.

During the *Encryption* phase, the random number $r \in \mathbb{Z}_p$ is generated and then used in both the first element $u$ and second element $c$ of the ciphertext $(u, c, \pi)$. The third element $\pi$ of the ciphertext is used to prove to both P1 and P2 that the same randomly generated $r$ was used in the first and second elements of the ciphertext. The verification of $\pi$ by either P1 or P2 provides protection from CCA, which rely on $c$ being handpicked by the attacker. Once P1 has conducted initial checks on the original ciphertext, the decryption protocol of *Equation j* may be initiated.

The roles of our two parties are not identical: it is the phone P1 that initially obtains the ciphertext, and decides, when to decrypt it. For decryption, it requests the help of the assisting server P2. But when the phone P1 initially receives the ciphertext, it can already perform some checks on it, and forget some of the components of the ciphertext that are later not used in the decryption protocol.

**Data:** public key $svk, pk, ek, B_1, B_2, \sigma$ and message $m$

**Result:** The ciphertext encrypting $m$ with $pk$

1 Check that $\sigma$ is a signature to $(ek, B_1, B_2)$ with $svk$     /* Can do ahead of time */

2 $r_0 \overset{\$}{\leftarrow} \mathbb{Z}_p, r_1 \overset{\$}{\leftarrow} \mathrm{I}(\rho + d + \kappa), r_2 \overset{\$}{\leftarrow} \mathrm{I}(\rho + d + \kappa), r_3 \overset{\$}{\leftarrow} \mathrm{I}(2\rho + d + 2\kappa)$

3 $(u, c) \leftarrow (g^{r_0}, m \oplus H(pk^{r_0}))$

4 Pick random coins $\mathbf{r}_1, \mathbf{r}_2, \mathbf{r}'_1,$ and $\mathbf{r}'_2$ for homomorphic encryption

5 $\alpha_1 \leftarrow g^{r_1 \bmod p}$ and $\Gamma_1 \leftarrow \mathcal{E}_{ek}(r_1; \mathbf{r}_1) \cdot B_1^{r_0}$ and $\Gamma_2 \leftarrow \mathcal{E}_{ek}(r_1; \mathbf{r}_2) \cdot B_2^{r_0}$

6 $g' \leftarrow H_1(g, u, \alpha_1, \Gamma_1, \Gamma_2, c)$, where $g' \in \mathbb{G}$

7 $h' \leftarrow (g')^{r_0}$

8 $\alpha'_1 \leftarrow (g')^{r_1 \bmod p}$

9 $\alpha_2 \leftarrow g^{r_2 \bmod p}$ and $\alpha_3 \leftarrow g^{r_3 \bmod p}$

10 $\alpha'_2 \leftarrow (g')^{r_2 \bmod p}$ and $\alpha'_3 \leftarrow (g')^{r_3 \bmod p}$

11 $A_1 \leftarrow \mathcal{E}_{ek}(r_3; \mathbf{r}'_1) \cdot B_1^{r_2}$ and $A_2 \leftarrow \mathcal{E}_{ek}(r_3; \mathbf{r}'_2) \cdot B_2^{r_2}$

12 $\beta' \leftarrow H_2(pk, ek, u, c, h', \alpha_1, \alpha'_1, \Gamma_1, \Gamma_2, \alpha_2, \alpha'_2, \alpha_3, \alpha'_3, A_1, A_2)$, where $\beta' \in \mathbf{I}(\rho)$

13 $\gamma_2 \leftarrow r_2 + \beta' \cdot r_0$ and $\gamma_3 \leftarrow r_3 + \beta' \cdot r_1$

14 $\mathbf{r}''_1 \leftarrow \mathbf{r}'_1 \boxplus (\beta' \boxdot \mathbf{r}_1)$ and $\mathbf{r}''_2 \leftarrow \mathbf{r}'_2 \boxplus (\beta' \boxdot \mathbf{r}_2)$

15 Return $u, c, \alpha_1, \Gamma_1, \Gamma_2, \alpha'_1, h', A_1, A_2, \alpha_2, \alpha'_2, \alpha_3, \alpha'_3, \gamma_2, \gamma_3, \mathbf{r}''_1, \mathbf{r}''_2$

**Algorithm 1:** Encryption

## Equation e

Given a public key ($svk, pk, ek, B_1, B_2, \sigma$), and a message $m \in \{0, 1\}^\ell$, perform the steps in the pseudocode shown in *Equation e*. In this algorithm, all values randomly generated from the sets I($k$) for various bit-lengths $k$ are thought of as integers, and the computations with them do not wrap around (wrap-arounds are explicit, using the mod operation). In *Equation* e, the outputs $u$ and $c$ are the ciphertext from the ElGamal encryption scheme. The outputs $\alpha_1$, $\Gamma_1$ and $\Gamma_2$ are the DVNIZK proof for the assisting server P2, that someone knows the discrete logarithm of $u$. The value $h'$ makes this DVNIZK have simulatable exponents. The rest of the ciphertext is a NIZK proof (i.e. verifiable by anyone) that $\alpha_1$, $\Gamma_1$, $\Gamma_2$ constitute this DVNIZK proof, and $\alpha'_1, h'$ make it have simulatable exponents. Presenting this proof amounts to showing that the encryptor knows the values $r_0$ and $r_1$, such that $u = g^{r0}$, $h' = (g')^{r0}$, $g^{r_1} = \alpha_1$, $(g')^{r_1} = \alpha'_1$, and $\mathcal{E}_{ek}(r_1) \cdot B_i^{r_0} = \Gamma_i$, where $i \in \{1,2\}$.

The NIZK proof is generated by picking random $r_2$ and $r_3$ for hiding the values $r_0$ and $r_1$, committing to them by giving the values $\alpha_3$, $\alpha'_3$ and $A_2$, and showing that their random linear combinations work as expected.

**Data:** public key $svk, pk, ek, B_1, B_2, \sigma$

**Data:** ciphertext $u, c, \alpha_1, \Gamma_1, \Gamma_2, \alpha'_1, h', A_1, A_2, \alpha_2, \alpha'_2, \alpha_3, \alpha'_3, \gamma_2, \gamma_3, \mathbf{r}''_1, \mathbf{r}''_2$

**Result:** components of the ciphertext to be kept for decryption

1 $g' \leftarrow H_1(g, u, \alpha_1, \Gamma_1, \Gamma_2, c)$, where $g' \in \mathbb{G}$

2 $\beta' \leftarrow H_2(pk, ek, u, c, h', \alpha_1, \alpha'_1, \Gamma_1, \Gamma_2, \alpha_2, \alpha'_2, \alpha_3, \alpha'_3, A_1, A_2)$, where $\beta' \in \mathbf{I}(\rho)$

3 Check that $\alpha_2 \cdot u^{\beta'} = g^{\gamma_2}$ and $\alpha'_2 \cdot (h')^{\beta'} = (g')^{\gamma_2}$

4 Check that $\alpha_3 \cdot \alpha_1^{\beta'} = g^{\gamma_3}$ and $\alpha'_3 \cdot (\alpha'_1)^{\beta'} = (g')^{\gamma_3}$

5 Check that $\mathcal{E}_{ek}(\gamma_3; \mathbf{r}''_1) \cdot B_1^{\gamma_2} = A_1 \cdot \Gamma_1^{\beta'}$ and $\mathcal{E}_{ek}(\gamma_3; \mathbf{r}''_2) \cdot B_2^{\gamma_2} = A_2 \cdot \Gamma_2^{\beta'}$

6 Return $u, c, \alpha_1, \Gamma_1, \Gamma_2$

**Algorithm 2:** Checks made by the phone, when receiving a ciphertext

## Equation f

When the phone P1 receives the ciphertext, it can immediately check the NIZK proof that the DVNIZK proof is a good proof. The pseudocode in *Equation f* shows how the check is done. The algorithm returns only these components of the ciphertext that are needed for decryption according to *Equation j*.

The use of the DVNIZK proofs ($\alpha_1$, $\Gamma_1$, $\Gamma_2$) is not the only manner in which proofs of knowledge of the exponent $r$ can be malleated and privacy for P1 can be obtained. By introducing more complex cryptographic primitives, such as bilinear pairings, NIZK proofs can be malleated even without the need to designate a particular verifier.

In the bilinear pairings setting, three cyclic groups $\mathbb{G}_1, \mathbb{G}_2, \mathbb{G}_T$ of the same size $p$ are used at the same time, where the decisional Diffie-Hellman problem is difficult in each group. In addition to the usual group operations in the three groups, there must exist an operation $e$ that takes two arguments - one from $\mathbb{G}_1$ and one from $\mathbb{G}_2$ - and returns an element of $\mathbb{G}_T$. This operation e must be bilinear, i.e. for all elements $g_1$ and $g_2$ of $\mathbb{G}_1$, elements $h_1$ and $h_2$ of $\mathbb{G}_2$, and numbers $x$ (in $\mathbb{Z}_p$), it must satisfy $e(g_1 \cdot g_2^x, h_1) = e(g_1, h_1) \cdot e(g_2, h_1)^x$, and $e(g_1, h_1 \cdot h_2^x,) = e(g_1, h_1) \cdot e(g_1, h_2)^x$. Also, the operation $e$ must be non-degenerate, meaning that there should exist inputs, where the output of $e$ is not the unit element of $\mathbb{G}_T$. For example, the elements of the groups $\mathbb{G}_1, \mathbb{G}_2$ may be points on related elliptic curves, while $\mathbb{G}_T$ is a subgroup of the multiplicative group of a finite field. Without wishing to be bound by theory, Weil pairings, or Tate pairings, both of which involve elliptical curves usually over finite fields, may for example be used.

Groth-Sahai proofs [see Jens Groth and Amit Sahai: "Efficient non-interactive proof systems for bilinear groups". EUROCRYPT 2008 proceedings, pages 415-432] are an example framework for constructing NIZK proofs about knowing the multiplicative relationships between elements of groups $\mathbb{G}_1, \mathbb{G}_2, \mathbb{G}_T$. Groth-Sahai proofs are malleable with respect to certain operations [see Melissa Chase, Markulf Kohlweiss, Anna Lysyanskaya, and Sarah Meiklejohn: "Malleable proof systems and applications". EUROCRYPT 2012 proceedings, pages 281-300]. For example, given a set of elements of $\mathbb{G}_1, \mathbb{G}_2, \mathbb{G}_T$ and a Groth-Sahai proof that these elements are in a certain relationship and/or the prover knows certain exponents that relate these elements, it is possible to introduce additional elements with certain relationships to existing ones, and perhaps remove some of the existing elements, and then modify the Groth-Sahai proof so that it also proves the relationships that hold for the newly introduced elements.

Taking the scheme whose decryption process is described in Fig. 4, we could use group $\mathbb{G}_1$ as the underlying group $\mathbb{G}$ of that scheme. In this case, we could use in place of the NIZK proof $\pi$ (*Equation i*) a Groth-Sahai proof that someone knows the discrete logarithm of $u$. It is now possible for the party P1 to replace $u$ with some $u' = u^z$ for a random $z$ (as in *Equation j*), and also change $\pi$ into $\pi'$, such that the latter proves that someone knows the discrete logarithm of $u'$. Party P1 will then ask party P2 to apply the secret key share $sk_2$ onto $u'$, including $\pi'$ in its request (instead of $\alpha_1', \Gamma_1', \Gamma_2'$). Party P2 verifies $\pi'$ against $u'$.

The details of Groth-Sahai proofs and their malleability will now be described and applied to the use case of blinding a ciphertext. Let $g$ be the generator of $\mathbb{G}_1$, and $h$ be the generator of $\mathbb{G}_2$. Groth-Sahai proofs make use of a Common Reference String (CRS), which must have been generated beforehand by a trusted party, and may be shared by all instances of Groth-Sahai proofs. In this case, the CRS consists of elements $\mathcal{Q}, \mathcal{U}, \mathcal{V}$ of $\mathbb{G}_2$, such that $(h, \mathcal{Q}, \mathcal{U}, \mathcal{V})$ is a Diffie-Hellman tuple, i.e. $\log_h \mathcal{Q} = \log_{\mathcal{U}} \mathcal{V}$. When the party performing the encryption has computed $u = g^r$,

1. Generate random element $s$ of $\mathbb{Z}_p$
2. Let $d_1 = \mathcal{U}^r \cdot h^s$
3. Let $d_2 = \mathcal{V}^r \cdot \mathcal{Q}^s$
4. Let $T = g^s$
5. The proof $\pi$ is $(d_1, d_2, T)$. We see that $d_1, d_2$ are elements of $G_2$, while $T$ is an element of $G_1$

In order to verify $\pi$ (with respect to $u$), the verifier performs the following checks:

1. Check *that $e(g, d_1) = e(u, \mathcal{U}) \cdot e(T, h)$*
2. Check that $e(g, d_2) = e(u, \mathcal{V}) . e(T, \mathcal{Q})$

When party P1 wants to blind the value $u$ and the proof $\pi = (d_1, d_2, T)$, it will generate random elements z,y of $\mathbb{Z}_p$, and perform the following computations:

1. Let $u' = u^z$

2. Let $d_1' = d_1^z \cdot h^y$

3. Let $d_2' = d_2^z \cdot Q^y$

4. Let $T' = T^z \cdot g^y$

Now $u'$ is the blinded value, and $(d_1', d_2', T')$ the blinded proof. The blinded proof is verified by performing exactly the same checks as for the original proof.

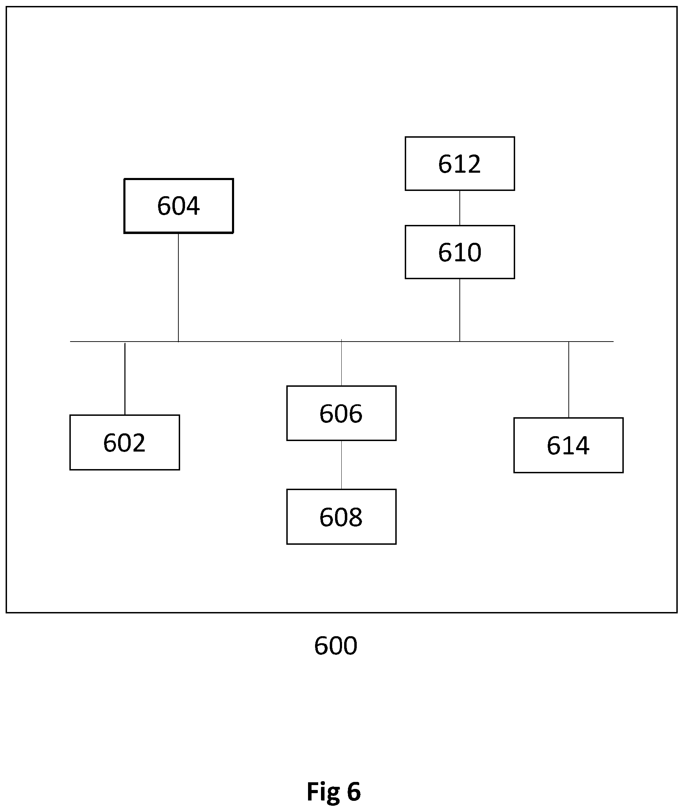

Turning finally to Figure 6, Figure 6 shows a schematic and simplified representation of a computer apparatus 600 which can be used to perform methods described herein, either alone, in combination with other computer apparatuses or as part of a network or a "cloud" computing arrangement.

The computer apparatus 600 comprises various data processing resources such as a processor 602 (in particular, a hardware processor) coupled to a central bus structure. Also connected to the bus structure are further data processing resources such as memory 604. A display adapter 606 connects a display device 608 to the bus structure. One or more user-input device adapters 610 connect a user-input device 612, such as a keyboard and/or a mouse to the bus structure. One or more communications adapters 614 are also connected to the bus structure to provide connections to other computer systems 600 and other networks.

In operation, the processor 602 of computer system 600 executes a computer program comprising computer-executable instructions that may be stored in memory 604. When executed, the computer-executable instructions may cause the computer system 600 to perform one or more of the methods described herein. The results of the processing performed may be displayed to a user via the display adapter 606 and display device 608. User inputs for controlling the operation of the computer system 600 may be received via the user-input device adapters 610 from the user-input devices 612.

It will be apparent that some features of computer system 600 shown in Figure 6 may be absent in certain cases. For example, one or more of the plurality of computer apparatuses 600 may have no need for display adapter 606 or display device 608. This may be the case, for example, for particular server-side computer apparatuses 600 which are used only for their processing capabilities and do not need to display information to users. Similarly, user input device adapter 610 and user input device 612 may not be required. In its simplest form, computer apparatus 600 comprises processor 602 and memory 604.

The above detailed description describes a variety of example arrangements for and methods of performing distributed decryption. However, the described arrangements and methods are merely exemplary, and it will be appreciated by a person skilled in the art that various modifications can be made without departing from the scope of the appended claims.

More generally, it should be appreciated that the number of steps shown in the figures is not intended to be limiting. Steps may be repeated as often as necessary and certain steps may be omitted.

The computer apparatus discussed above may be a local computer or a server.

While various specific combinations of components and method steps have been described, these are merely examples. Components and method steps may be combined in any suitable arrangement or combination. Components and method steps may also be omitted to leave any suitable combination of components or method steps.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information

is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

In an implementation, the modules, components and other features described herein can be implemented as discrete components or integrated in the functionality of hardware components such as ASICS, FPGAs, DSPs or similar devices.

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the disclosure. It will also be apparent that there are many variations that have not been described, but that fall within the scope of the appended claims.

**Claims**

1. A computer-implemented method for distributed asymmetric decryption between a first party (110) and a second party (120), each of the first and second parties holding a different respective share of a secret key, the method comprising:

   receiving, at the second party: (i) a zero-knowledge proof of knowledge; and (ii) a plurality of inputs associated with a ciphertext to be decrypted, wherein the ciphertext is encrypted with a public key associated with the secret key;

   checking, by the second party, that the zero-knowledge proof of knowledge was generated based on the first party's share of the secret key; and

   in response to determining that the zero-knowledge proof of knowledge was generated based on the first party's share of the secret key, sending, by the second party, information derived from the second party's share of the secret key;

   wherein the ciphertext comprises at least three elements:

   a first element, comprising a generator of a cyclic group raised to the power of a randomly generated number within the size of the cyclic group;

   a second element, comprising an encryption of a plaintext based on the public key, a hashing function, and the randomly generated number;

   a third element, comprising a non-interactive zero-knowledge proof of knowledge which is based on the randomly generated number;

   and wherein the plurality of inputs associated with the ciphertext received at the second party comprise:

   a blinded version of the first element of the ciphertext, the blinded version obtained by secretly picking and applying an exponent to mask the first element of the ciphertext; and

   a blinded proof obtained by malleating the non-interactive zero-knowledge proof of knowledge in the third element of the ciphertext.

2. The method of claim 1, wherein the information derived from the second party's share of the secret key is calculated by applying the second party's share of the secret key to an element of the ciphertext.

3. The method of claim 1, further comprising:
   checking, at the second party, that the non-interactive zero-knowledge proof of knowledge pertains to the same randomly generated number as the first element and the second element of the ciphertext.

4. The method of claim 3, wherein the non-interactive zero-knowledge proof of knowledge comprises:

   a first value ($\alpha$) based on the generator of the cyclic group and the randomly generated number; and

   a second value ($\gamma$) based at least on the randomly generated number, a random hashing function, the generator of the cyclic group, the first value ($\alpha$), and the first element of the ciphertext; and

   wherein checking that the non-interactive zero-knowledge proof of knowledge pertains to the same randomly generated number as the first element and the second element of the ciphertext optionally comprises:

   computing, at the second party, a third value ($\beta$) by inputting: (i) the generator of the cyclic group, (ii) the first element of the ciphertext, (iii) the first value ($\alpha$), and (iv) the second element of the ciphertext, into a random hashing function;

   checking whether the generator of the cyclic group raised to the power of the second value ($\gamma$) equals a value obtained by multiplying the first value ($\alpha$) by the first element of the ciphertext raised to the power of the computed third value ($\beta$).

5. The method of claim 1, wherein malleating the proof in the third element of the ciphertext comprises secretly picking and applying one or more exponents to mask components of the proof; and/or

   wherein the blinded proof is a designated-verifier non-interactive zero-knowledge proof of knowledge, which is malleated using a proof creation key and can only be verified using a proof verification key paired with the proof creation key; and the second party holds the proof verification key paired with the proof creation key;

   the method optionally further comprising verifying, at the second party, the blinded proof.

6. A network device (second party) configured for performing distributed asymmetric decryption with a client device (first party) holding a first share of a secret key, the network device comprising a memory storing a second share of the secret key, and being configured to perform a method according to any of claim 1 to 5.

7. A computer-implemented method for distributed asymmetric decryption between a first party (110) and a second party (120), each of the first and second parties holding a different respective share of a secret key, the method comprising:

generating, by the first party, a zero-knowledge proof of knowledge based on the first party's share of the secret key;
sending, by the first party: (i) the zero-knowledge proof of knowledge; and (ii) a plurality of inputs associated with a ciphertext to be decrypted, wherein the ciphertext is encrypted with a public key associated with the secret key;
receiving, at the first party, information derived from the second party's share of the secret key; and
generating, by the first party, a decryption of the ciphertext using the first party's share of the secret key and the received information;
wherein the ciphertext comprises at least three elements:

a first element, comprising a generator of the cyclic group raised to the power of a randomly generated number within the size of the cyclic group;
a second element, comprising an encryption of a plaintext based on the public key, a hashing function, and the randomly generated number;
a third element, comprising a non-interactive zero-knowledge proof of knowledge which is based on the randomly generated number;

and wherein the plurality of inputs associated with the ciphertext sent by the first party comprise:

a blinded version of the first element of the ciphertext, the blinded version obtained by secretly picking and applying an exponent to mask the first element of the ciphertext; and
a blinded proof obtained by malleating the non-interactive zero-knowledge proof of knowledge in the third element of the ciphertext.

8. The method of claim 7, further comprising:

generating a first party share of the public key based on the first party's share of the secret key;
using the first party share of the public key to generate the zero-knowledge proof of knowledge; and
destroying the first party's share of the public key after use.

9. The method of claim 7 or claim 8, wherein the first party's share of the public key is generated responsive to receiving a request to decrypt the ciphertext and is destroyed after use.

10. The method according to any of claims 7 to 9, wherein generating the zero-knowledge proof of knowledge based on the first party's share of the secret key comprises generating two or more randomized values based on a generator of a cyclic group, the first party's share of the secret key, and the first party's share of the public key, using a randomly generated number and a random hashing function.

11. The method of claim 7, wherein malleating the proof in the third element of the ciphertext comprises secretly picking and applying one or more exponents to mask components of the proof; and/or

wherein the blinded proof is a designated-verifier non-interactive zero-knowledge proof of knowledge, which is malleated using a proof creation key and can only be verified using a proof verification key paired with the proof creation key; and the second party holds the proof verification key paired with the proof creation key;
wherein the method further comprises verifying, at the second party, the blinded proof.

12. A client device "first party" (110) configured for performing distributed asymmetric decryption with a network device "second party" (120) holding a second share of a secret key, the client device comprising a memory storing a first share of the secret key, and being configured to perform a method according to any of claims 7 to 11.

13. A computer readable medium (114/124) having instructions stored thereon which when executed by a processor (112/122) cause the processor to perform a method according to any of claims 1 to 5 or a method according to any of claims 7 to 11.

**Patentansprüche**

1. Computerimplementiertes Verfahren zur verteilten asymmetrischen Entschlüsselung zwischen einer ersten Partei (110) und einer zweiten Partei (120), wobei jede der ersten und zweiten Parteien einen unterschiedlichen jeweiligen Anteil eines geheimen Schlüssels hält, wobei das Verfahren Folgendes umfasst:

   Empfangen, bei der zweiten Partei: (i) einen Null-Wissen-Wissensnachweis; und (ii) eine Vielzahl von Eingaben, die mit einem zu entschlüsselnden Chiffretext assoziiert sind, wobei der Chiffretext mit einem öffentlichen Schlüssel verschlüsselt ist, der mit dem geheimen Schlüssel assoziiert ist;
   Überprüfen, durch die zweite Partei, dass der Null-Wissen-Wissensnachweis basierend auf dem Anteil der ersten Partei an dem geheimen Schlüssel generiert wurde; und
   als Reaktion auf das Bestimmen, dass der Null-Wissen-Wissensnachweis basierend auf dem Anteil der ersten Partei an dem geheimen Schlüssel erzeugt wurde, Senden, durch die zweite Partei, von Informationen, die aus dem Anteil der zweiten Partei an dem geheimen Schlüssel abgeleitet wurden;
   wobei der Chiffretext mindestens drei Elemente umfasst:

      ein erstes Element, das einen Generator einer zyklischen Gruppe umfasst, der auf die Potenz einer zufällig erzeugten Zahl innerhalb der Größe der zyklischen Gruppe erhöht ist;
      ein zweites Element, das eine Verschlüsselung eines Klartextes basierend auf dem öffentlichen Schlüssel, einer Hashingfunktion und der zufällig erzeugten Zahl umfasst;
      ein drittes Element, das einen nicht-interaktiven Null-Wissen-Wissensnachweis umfasst, der auf der zufällig erzeugten Zahl basiert;
      und wobei die Vielzahl von Eingaben, die mit dem an der zweiten Partei empfangenen Chiffretext assoziiert sind, Folgendes umfasst:

         eine verblindete Version des ersten Elements des Chiffretextes, wobei die verblindete Version erhalten wird, indem geheim ein Exponent ausgewählt und angewendet wird, um das erste Element des Chiffretextes zu maskieren; und
         einen verblindeten Nachweis, der durch das Schmieden des nicht-interaktiven Null-Wissen-Wissensnachweises im dritten Element des Chiffretextes erhalten wird.

2. Verfahren nach Anspruch 1, wobei die Informationen, die von dem Anteil der zweiten Partei an dem geheimen Schlüssel abgeleitet sind, durch Anwenden des Anteils der zweiten Partei an dem geheimen Schlüssel auf ein Element des Chiffretextes berechnet werden.

3. Verfahren nach Anspruch 1, das ferner Folgendes umfasst:
   Überprüfen, bei der zweiten Partei, dass der nicht-interaktive Null-Wissen-Wissensnachweis die gleiche zufällig generierte Zahl wie das erste Element und das zweite Element des Chiffretextes betrifft.

4. Verfahren nach Anspruch 3, wobei der nicht-interaktive Null-Wissen-Wissensnachweis Folgendes umfasst:

   einen ersten Wert ($\alpha$) basierend auf dem Generator der zyklischen Gruppe und der zufällig erzeugten Zahl; und
   einen zweiten Wert ($\gamma$) basierend zumindest auf der zufällig erzeugten Zahl, einer Zufalls-Hashingfunktion, dem Generator der zyklischen Gruppe, dem ersten Wert ($\alpha$) und dem ersten Element des Chiffretextes; und
   wobei das Überprüfen, dass der nicht-interaktive Null-Wissen-Wissensnachweis die gleiche zufällig erzeugte Zahl wie das erste Element und das zweite Element des Chiffretextes betrifft, optional Folgendes umfasst:

      Berechnen eines dritten Wertes ($\beta$) bei der zweiten Partei durch folgende Eingabe: (i) des Generators der zyklischen Gruppe, (ii) des ersten Elements des Chiffretextes, (iii) des ersten Wertes ($\alpha$) und (iv) des zweiten Elements des Chiffretextes in eine Zufalls-Hashingfunktion;
      Überprüfen, ob der Generator der zyklischen Gruppe, der auf die Potenz des zweiten Wertes ($\gamma$) angehoben wird, gleich einem Wert ist, der durch Multiplizieren des ersten Wertes ($\alpha$) mit dem ersten Element des Chiffretextes, das auf die Potenz des berechneten dritten Wertes ($\beta$) angehoben wird, erhalten wird.

5. Verfahren nach Anspruch 1, wobei das Schmieden des Nachweises in dem dritten Element des Chiffretextes das geheime Aufnehmen und Anwenden eines oder mehrerer Exponenten auf Maskenkomponenten des Nachweises umfasst; und/oder

wobei der verblindete Nachweis ein nicht-interaktiver Null-Wissen-Wissensnachweis eines bestimmten Verifizierers ist, der unter Verwendung eines Nachweiserzeugungsschlüssels geschmiedet wird und nur unter Verwendung eines Nachweisprüfungsschlüssels, der mit dem Nachweiserzeugungsschlüssel gepaart ist, verifiziert werden kann; und die zweite Partei den Nachweisprüfungsschlüssel, der mit dem Nachweiserzeugungsschlüssel gepaart ist, hält;
wobei das Verfahren optional ferner das Verifizieren, an der zweiten Partei, des verblindeten Nachweises umfasst.

6. Netzwerkvorrichtung (zweite Partei), die zum Durchführen einer verteilten asymmetrischen Entschlüsselung mit einer Client-Vorrichtung (erste Partei) konfiguriert ist, die einen ersten Anteil eines geheimen Schlüssels hält, wobei die Netzwerkvorrichtung einen Speicher umfasst, der einen zweiten Anteil des geheimen Schlüssels speichert, und die dazu konfiguriert ist, ein Verfahren nach einem der Ansprüche 1 bis 5 durchzuführen.

7. Computerimplementiertes Verfahren zur verteilten asymmetrischen Entschlüsselung zwischen einer ersten Partei (110) und einer zweiten Partei (120), wobei jede der ersten und zweiten Parteien einen unterschiedlichen jeweiligen Anteil eines geheimen Schlüssels hält, wobei das Verfahren Folgendes umfasst:

Erzeugen, durch die erste Partei, eines Null-Wissen-Wissensnachweises auf der Grundlage des Anteils der ersten Partei an dem geheimen Schlüssel;
Senden, durch die erste Partei: (i) des Null-Wissen-Wissensnachweises; und (ii) mehrerer Eingaben, die mit einem zu entschlüsselnden Chiffretext assoziiert sind, wobei der Chiffretext mit einem öffentlichen Schlüssel verschlüsselt ist, der mit dem geheimen Schlüssel assoziiert ist;
Empfangen, bei der ersten Partei, von Informationen, die aus dem Anteil der zweiten Partei an dem geheimen Schlüssel abgeleitet sind; und
Erzeugen, durch die erste Partei, einer Entschlüsselung des Chiffretextes unter Verwendung des Anteils der ersten Partei an dem geheimen Schlüssel und der empfangenen Informationen;
wobei der Chiffretext mindestens drei Elemente umfasst:

ein erstes Element, das einen Generator der zyklischen Gruppe umfasst, der auf die Potenz einer zufällig erzeugten Zahl innerhalb der Größe der zyklischen Gruppe erhöht ist;
ein zweites Element, das eine Verschlüsselung eines Klartextes basierend auf dem öffentlichen Schlüssel, einer Hashingfunktion und der zufällig erzeugten Zahl umfasst;
ein drittes Element, das einen nicht-interaktiven Null-Wissen-Wissensnachweis umfasst, der auf der zufällig erzeugten Zahl basiert;
und wobei die Vielzahl von Eingaben, die mit dem durch die erste Partei gesendeten Chiffretext assoziiert sind, Folgendes umfasst:

eine verblindete Version des ersten Elements des Chiffretextes, wobei die verblindete Version erhalten wird, indem geheim ein Exponent ausgewählt und angewendet wird, um das erste Element des Chiffretextes zu maskieren; und
einen verblindeten Nachweis, der durch das Schmieden des nicht-interaktiven Null-Wissen-Wissensnachweises im dritten Element des Chiffretextes erhalten wird.

8. Verfahren nach Anspruch 7, das ferner Folgendes umfasst:

Erzeugen eines Anteils der ersten Partei an dem öffentlichen Schlüssel basierend auf dem Anteil der ersten Partei an dem geheimen Schlüssel;
Verwenden des Anteils der ersten Partei des öffentlichen Schlüssels, um den Null-Wissen-Wissensnachweis zu generieren; und
Zerstören des Anteils der ersten Partei am öffentlichen Schlüssel nach der Verwendung.

9. Verfahren nach Anspruch 7 oder Anspruch 8, wobei der Anteil der ersten Partei an dem öffentlichen Schlüssel als Reaktion auf das Empfangen einer Anforderung zum Entschlüsseln des Chiffretextes erzeugt wird und nach der Verwendung zerstört wird.

**10.** Verfahren nach einem der Ansprüche 7 bis 9, wobei das Erzeugen des Null-Wissen-Wissensnachweises basierend auf dem Anteil der ersten Partei an dem geheimen Schlüssel das Erzeugen von zwei oder mehr randomisierten Werten basierend auf einem Generator einer zyklischen Gruppe, dem Anteil der ersten Partei an dem geheimen Schlüssel und dem Anteil der ersten Partei an dem öffentlichen Schlüssel unter Verwendung einer zufällig erzeugten Zahl und einer Zufalls-Hashingfunktion umfasst.

**11.** Verfahren nach Anspruch 7, wobei das Schmieden des Nachweises in dem dritten Element des Chiffretextes das geheime Aufnehmen und Anwenden eines oder mehrerer Exponenten auf Maskenkomponenten des Nachweises umfasst; und/oder

wobei der verblindete Nachweis ein nicht-interaktiver Null-Wissen-Wissensnachweis eines bestimmten Verifizierers ist, der unter Verwendung eines Nachweiserzeugungsschlüssels geschmiedet wird und nur unter Verwendung eines Nachweisprüfungsschlüssels, der mit dem Nachweiserzeugungsschlüssel gepaart ist, verifiziert werden kann; und die zweite Partei den Nachweisprüfungsschlüssel, der mit dem Nachweiserzeugungsschlüssel gepaart ist, hält;
wobei das Verfahren ferner das Verifizieren, an der zweiten Partei, des verblindeten Nachweises umfasst.

**12.** Client-Vorrichtung "erste Partei" (110), die zum Durchführen einer verteilten asymmetrischen Entschlüsselung mit einer Netzwerkvorrichtung "zweite Partei" (120) konfiguriert ist, die einen zweiten Anteil eines geheimen Schlüssels hält, wobei die Client-Vorrichtung einen Speicher umfasst, der einen ersten Anteil des geheimen Schlüssels speichert, und dazu konfiguriert ist, ein Verfahren nach einem der Ansprüche 7 bis 11 durchzuführen.

**13.** Computerlesbares Medium (114/124) mit darauf gespeicherten Anweisungen, die bei Ausführung durch einen Prozessor (112/122) bewirken, dass der Prozessor ein Verfahren nach einem der Ansprüche 1 bis 5 oder ein Verfahren nach einem der Ansprüche 7 bis 11 durchführt.

**Revendications**

**1.** Procédé mis en œuvre par ordinateur de déchiffrement asymétrique réparti entre une première partie (110) et une seconde partie (120), chacune des première et seconde parties détenant une part respective différente d'une clé secrète, le procédé comprenant :

la réception, au niveau de la seconde partie : (i) d'une preuve de connaissance à divulgation nulle de connaissance ; et (ii) d'une pluralité d'entrées associées à un texte chiffré à déchiffrer, le texte chiffré étant chiffré avec une clé publique associée à la clé secrète ;
la vérification, par la seconde partie, que la preuve de connaissance à divulgation nulle de connaissance a été générée sur la base de la part de la clé secrète de la première partie ; et
en réponse à la détermination que la preuve de connaissance à divulgation nulle de connaissance a été générée sur la base de la part de la clé secrète de la première partie, l'envoi, par la seconde partie, d'informations dérivées de la part de la clé secrète de la seconde partie ;
le texte chiffré comprenant au moins trois éléments :

un premier élément, comprenant un générateur d'un groupe cyclique élevé à la puissance d'un nombre généré aléatoirement à l'intérieur de la taille du groupe cyclique ;
un deuxième élément, comprenant un chiffrement d'un texte en clair basé sur la clé publique, une fonction de hachage et le nombre généré aléatoirement ;
un troisième élément, comprenant une preuve de connaissance à divulgation nulle de connaissance non interactive qui est basée sur le nombre généré aléatoirement ;
et la pluralité d'entrées associées au texte chiffré, reçues au niveau de la seconde partie, comprenant :

une version aveuglée du premier élément du texte chiffré, la version aveuglée étant obtenue en sélectionnant secrètement et en appliquant un exposant pour masquer le premier élément du texte chiffré ; et
une preuve aveuglée obtenue en malléant la preuve de connaissance à divulgation nulle de connaissance non interactive dans le troisième élément du texte chiffré.

**2.** Procédé selon la revendication 1, les informations dérivées de la part de la clé secrète de la seconde partie étant calculées en appliquant la part de la clé secrète de la seconde partie à un élément du texte chiffré.

3. Procédé selon la revendication 1, comprenant en outre :
la vérification, au niveau de la seconde partie, que la preuve de connaissance à divulgation nulle de connaissance non interactive se rapporte au même nombre généré aléatoirement que le premier élément et le deuxième élément du texte chiffré.

4. Procédé selon la revendication 3, la preuve de connaissance à divulgation nulle de connaissance non interactive comprenant :

une première valeur ($\alpha$) basée sur le générateur du groupe cyclique et le nombre généré aléatoirement ; et
une deuxième valeur ($\gamma$) basée au moins sur le nombre généré aléatoirement, une fonction de hachage aléatoire, le générateur du groupe cyclique, la première valeur ($\alpha$) et le premier élément du texte chiffré ; et
la vérification que la preuve de connaissance à divulgation nulle de connaissance non interactive se rapporte au même nombre généré aléatoirement que le premier élément et le deuxième élément du texte chiffré comprenant éventuellement :

le calcul, au niveau de la seconde partie, d'une troisième valeur ($\beta$) en entrant : (i) le générateur du groupe cyclique, (ii) le premier élément du texte chiffré, (iii) la première valeur ($\alpha$) et (iv) le deuxième élément du texte chiffré, dans une fonction de hachage aléatoire ;
la vérification du point de savoir si le générateur du groupe cyclique élevé à la puissance de la deuxième valeur ($\gamma$) est égal à une valeur obtenue en multipliant la première valeur ($\alpha$) par le premier élément du texte chiffré élevé à la puissance de la troisième valeur calculée ($\beta$).

5. Procédé selon la revendication 1, la malléation de la preuve dans le troisième élément du texte chiffré comprenant la sélection secrète et l'application d'un ou plusieurs exposants pour masquer des composants de la preuve ; et/ou

la preuve aveuglée étant une preuve de connaissance à divulgation nulle de connaissance non interactive à vérificateur désigné, qui est malléée à l'aide d'une clé de création de preuve et ne peut être vérifiée qu'à l'aide d'une clé de vérification de preuve couplée à la clé de création de preuve ; et la seconde partie détenant la clé de vérification de preuve couplée à la clé de création de preuve ;
le procédé comprenant en outre, éventuellement, la vérification, au niveau de la seconde partie, de la preuve aveuglée.

6. Dispositif de réseau (seconde partie) configuré pour effectuer un déchiffrement asymétrique réparti avec un dispositif client (première partie) détenant une première part d'une clé secrète, le dispositif de réseau comprenant une mémoire stockant une seconde part de la clé secrète, et étant configuré pour réaliser un procédé selon l'une quelconque des revendications 1 à 5.

7. Procédé mis en œuvre par ordinateur de déchiffrement asymétrique réparti entre une première partie (110) et une seconde partie (120), chacune des première et seconde parties détenant une part respective différente d'une clé secrète, le procédé comprenant :

la génération, par la première partie, d'une preuve de connaissance à divulgation nulle de connaissance sur la base de la part de la clé secrète de la première partie ;
l'envoi, par la première partie : (i) de la preuve de connaissance à divulgation nulle de connaissance ; et (ii) d'une pluralité d'entrées associées à un texte chiffré à déchiffrer, le texte chiffré étant chiffré avec une clé publique associée à la clé secrète ;
la réception, au niveau de la première partie, d'informations dérivées de la part de la clé secrète de la seconde partie ; et
la génération, par la première partie, d'un déchiffrement du texte chiffré à l'aide de la part de la clé secrète de la première partie et des informations reçues ;
le texte chiffré comprenant au moins trois éléments :

un premier élément, comprenant un générateur du groupe cyclique élevé à la puissance d'un nombre généré aléatoirement à l'intérieur de la taille du groupe cyclique ;
un deuxième élément, comprenant un chiffrement d'un texte en clair basé sur la clé publique, une fonction de hachage et le nombre généré aléatoirement ;

un troisième élément, comprenant une preuve de connaissance à divulgation nulle de connaissance non interactive qui est basée sur le nombre généré aléatoirement ;

et la pluralité d'entrées associées au texte chiffré, envoyées par la première partie, comprenant :

une version aveuglée du premier élément du texte chiffré, la version aveuglée étant obtenue en sélectionnant secrètement et en appliquant un exposant pour masquer le premier élément du texte chiffré ; et

une preuve aveuglée obtenue en malléant la preuve de connaissance à divulgation nulle de connaissance non interactive dans le troisième élément du texte chiffré.

8. Procédé selon la revendication 7, comprenant en outre :

la génération d'une part de la clé publique de la première partie sur la base de la part de la clé secrète de la première partie ;

l'utilisation de la part de la clé publique de la première partie pour générer la preuve de connaissance à divulgation nulle de connaissance ; et

la destruction de la part de la clé publique de la première partie après utilisation.

9. Procédé selon la revendication 7 ou la revendication 8, la part de la clé publique de la première partie étant générée en réponse à la réception d'une demande de déchiffrement du texte chiffré et étant détruite après utilisation.

10. Procédé selon l'une quelconque des revendications 7 à 9, la génération de la preuve de connaissance à divulgation nulle de connaissance sur la base de la part de la clé secrète de la première partie comprenant la génération de deux valeurs aléatoires ou plus sur la base d'un générateur d'un groupe cyclique, de la part de la clé secrète de la première partie et de la part de la clé publique de la première partie, en utilisant un nombre généré aléatoirement et une fonction de hachage aléatoire.

11. Procédé selon la revendication 7, la malléation de la preuve dans le troisième élément du texte chiffré comprenant la sélection secrète et l'application d'un ou plusieurs exposants pour masquer des composants de la preuve ; et/ou

la preuve aveuglée étant une preuve de connaissance à divulgation nulle de connaissance non interactive à vérificateur désigné, qui est malléée à l'aide d'une clé de création de preuve et ne peut être vérifiée qu'à l'aide d'une clé de vérification de preuve couplée à la clé de création de preuve ; et la seconde partie détenant la clé de vérification de preuve couplée à la clé de création de preuve ;

le procédé comprenant en outre la vérification, au niveau de la seconde partie, de la preuve aveuglée.

12. Dispositif client « première partie » (110) configuré pour effectuer un déchiffrement asymétrique réparti avec un dispositif de réseau « seconde partie » (120) détenant une seconde part d'une clé secrète, le dispositif client comprenant une mémoire stockant une première part de la clé secrète, et étant configuré pour réaliser un procédé selon l'une quelconque des revendications 7 à 11.

13. Support lisible par ordinateur (114/124) sur lequel sont stockées des instructions qui, lorsqu'elles sont exécutées par un processeur (112/122), amènent le processeur à réaliser un procédé selon l'une quelconque des revendications 1 à 5 ou un procédé selon l'une quelconque des revendications 7 à 11.

**Fig. 1**

Client Computing
Device (P1)                    110

Processor(s)   112

Memory                114

Data

Instructions

$pk, sk_1, ciphertext$

**Fig. 2**

Server Device (P2)             120

Processor(s)    122

Memory                124

Data

Instructions

$pk, sk_2, pk_1, pk_2$

**Fig. 3**

Client (P1)                                    Server (P2)

310 — Check proof in the third element of the ciphertext

312 — Compute $pk_1$ based on $sk_1$

314 — Generate proof of knowledge based on $sk_1$

316 — Send: ciphertext; generated proof

Check proof in the third element of the ciphertext — 318

Check received proof of knowledge based on $sk_1$ — 320

Compute $w$ based on $sk_2$ — 322

Generate proof of knowledge based on $sk_2$ — 324

328 — Check received proof of knowledge based on $sk_2$

Send: w; generated proof — 326

330 — Decrypt second element of the ciphertext based on $sk_1$ and $w$

332 — Obtain the plaintext

**Fig. 4**

## Client (P1)

**510** Compute $pk_1$ based on $sk_1$

**512** Use secretly picked exponent to mask the first element of the ciphertext

**514** Malleate proof in the third element of the ciphertext

**516** Compose blinded ciphertext with the masked first element and the malleated proof

**518** Generate proof of knowledge based on $sk_1$

**520** Send: blinded ciphertext; generated proof

**532** Check received proof of knowledge based on $sk_2$

**534** Decrypt second element of the ciphertext based on $sk_1$ and w

**536** Obtain the plaintext

## Server (P2)

**522** Check malleated proof in the blinded ciphertext

**524** Check received proof of knowledge based on $sk_1$

**526** Compute w based on $sk_2$

**528** Generate proof of knowledge based on $sk_2$

**530** Send: w; generated proof

**Fig. 5**

600

**Fig 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021391987 A1

- WO 2022069035 A1

**Non-patent literature cited in the description**

- **IVAN DAMGÅRD** ; **NELLY FAZIO** ; **ANTONIO NICOLOSI**. Non-interactive Zero-Knowledge from Homomorphic Encryption. *Proceedings of the Theory of Cryptography Conference (TCC)*, 2006, 41-59

- **JENS GROTH** ; **AMIT SAHAI**. Efficient non-interactive proof systems for bilinear groups. *EUROCRYPT*, 2008, 415-432
- **MELISSA CHASE** ; **MARKULF KOHLWEISS** ; **ANNA LYSYANSKAYA** ; **SARAH MEIKLEJOHN**. Malleable proof systems and applications. *EUROCRYPT*, 2012, 281-300